# EUROPÄISCHE PATENTSCHRIFT

(11) **EP 0 829 176 B1**
(45) Veröffentlichungstag und Bekanntmachung des Hinweises auf die Patenterteilung: **19.12.2001**
(21) Anmeldenummer: 96919597.3
(22) Anmeldetag: 29.05.1996
(51) Int. Cl.: H04Q 7/32, H04Q 7/38

(54) **MOBILFUNKGERÄT MIT UNTERBRECHUNGSFREIEM WEITERREICHEN ZWISCHEN UNSYNCHRONISIERTEN BASISSTATIONEN**
MOBILE RADIOTELEHPONE FOR HANDOVER WITHOUT INTERRUPTION BETWEEN UNSYNCHRONISED BASE STATIONS
APPAREIL RADIOTELEPHONIQUE MOBILE POUR TRANSFERT SANS INTERRUPTION ENTRE STATIONS DE BASE NON SYNCHRONISEES

(30) Priorität: 31.05.1995 DE 19519965
(43) Veröffentlichungstag der Anmeldung: 18.03.1998
(73) Patentinhaber: SIEMENS AKTIENGESELLSCHAFT, 80333 München (DE)
(72) Erfinder: WEDI, Christoph, D-46395 Bocholt (DE); MERKER, Andreas, D-48612 Horstmar (DE)
(86) Internationale Anmeldenummer: DE9600931
(87) Internationale Veröffentlichungsnummer: WO9638991

(56) Entgegenhaltungen:
- EP-A- 0 576 079
- EP-A- 0 577 322
- EP-A- 0 615 396

## Beschreibung

Die Erfindung bezieht sich auf ein mobiles Funkempfangsgerät für zellulare Funk-Telekommunikationssysteme gemäß dem Oberbegriff des Patentanspruches 1.

Zwei der gegenwärtig leistungsfähigsten drahtlosen Telekommunikationssysteme sind das Mobilfunksystem basierend auf dem GSM-Standard (**G**roupe **S**péciale **M**obile oder **G**lobal **S**ystem for **M**obile Communication; vgl. Informatik Spektrum 14 (Jun. 1991), No.3, Berlin; A. Mann: "Der GSM-Standard - Grundlage für digitale europäische Mobilfunknetze"; Seiten 137 bis 152) und das Schnurlos-Telefonsystem basierend auf dem DECT-Standard (**D**igital **E**nhanced (früher: **E**uropean) **C**ordless **T**elecommunications; vgl. **(1):** Nachrichtentechnik Elektronik 42 (Jan./Feb. 1992), No.1, Berlin; U. Pilger: "Struktur des DECT-Standards"; Seiten 23 bis 29 **in Verbindung mit** der ETSI-Publikation ETS 300175-1...9, Oktober 1992; (**2**): Siemens Components 31 (1993), No.6; S. Althammer und D. Brückmann: "Hochoptimierte IC's für DECT-Schnurlostelefone", Seiten 215 bis 218; **(3):** telcom report 16 (1993), No.1, J.H. Koch: "Digitaler Komfort für schnurlose Telekommunikation - DECT-Standard eröffnet neue Nutzungssgebiete", Seiten 26 und 27), die beide Funknachrichten u.a. nach dem TDMA-Verfahren (**T**ime **D**ivision **M**ultiple **A**ccess) übertragen.

Die vorliegende Erfindung ist jedoch weder auf diese beiden Telekommunikationssysteme noch auf das TDMA-Übertragungsverfahren beschränkt. So erstreckt sich die Erfindung auch auf solche Systeme, die in der Druckschrift TIB-RO9067(5)-P. Bauer-Trocheris: "UMTS-Integrator für die mobile Kommunikation - ein Ausblick auf die Mobilfunklandschaft nach dem Jahr 2000", Bericht über die Tagung "Europäischer Mobilfunk, 5. Jahrestreffen der deutschen und europäischen Mobilfunkbranche, FI-BA Kongresse, München 24. bis 26. Feb. 1993" aufgeführt sind.

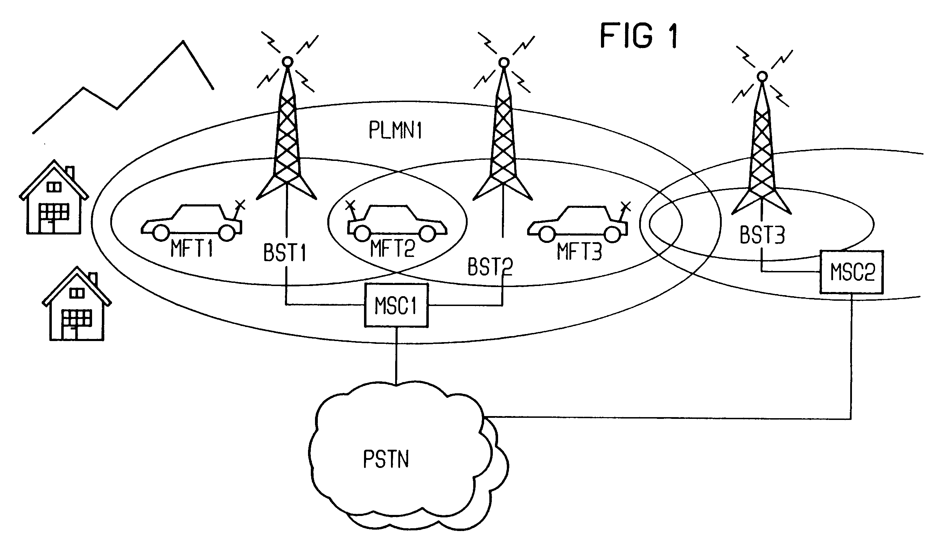

Das GSM-Mobilfunksystem ist ein digitales zellulares System, bei dem gemäß FIGUR 1 (vgl. tec 2/93 - Das technische Magazin von Ascom "Wege zur universellen mobilen Telekommunikation", Seiten 35 bis 42) eine Vielzahl von Basisstationen BST1...BST3 in Zellen eines zellularen Versorgungsgebietes aufgestellt sind. Die Zellen bzw. die Basisstationen BST1...BST3 sind untereinander und mit der Außenwelt über eine mobile Schaltzentrale MSC1, MSC2 (**M**obile **S**witching **C**enter) verbunden. Für einen effizienten Netzaufbau sind meistens mehrere dieser mobilen Schaltzentralen MSC in einem öffentlichen landgestützten mobilen Netzwerk PLMN1, PLMN2 (**P**ublic **L**and **M**obile **N**etwork) zusammengefaßt. Darüber hinaus sind die mobilen Schaltzentralen MSC1, MSC2 mit einem öffentlichen Fernsprechnetz PSTN (Public Switched Telephone Network) verbunden. Ein Mobilfunkteil MFT1..MFT3, von dem aus in der Regel ein Gespräch geführt wird, wird in der Regel durch diejenige Basisstation bedient, zu der es die beste Funkverbindung unterhalten kann. Im GSM-Mobilfunk bewegen sich die Benutzer unter Umständen mit hoher Geschwindigkeit in dem zellularen Versorgungsgebiet. Dies führt dazu, daß während eines Gespräches mehrere Mobilfunkzellen durchquert werden. Um eine unterbrechungsfreie Übertragung von einer Nachbarzelle zu einer anderen Nachbarzelle zu gewährleisten (seamless Handover), sind spezielle Protokolle zwischen dem Mobilfunkteil und der Basisstation erforderlich.

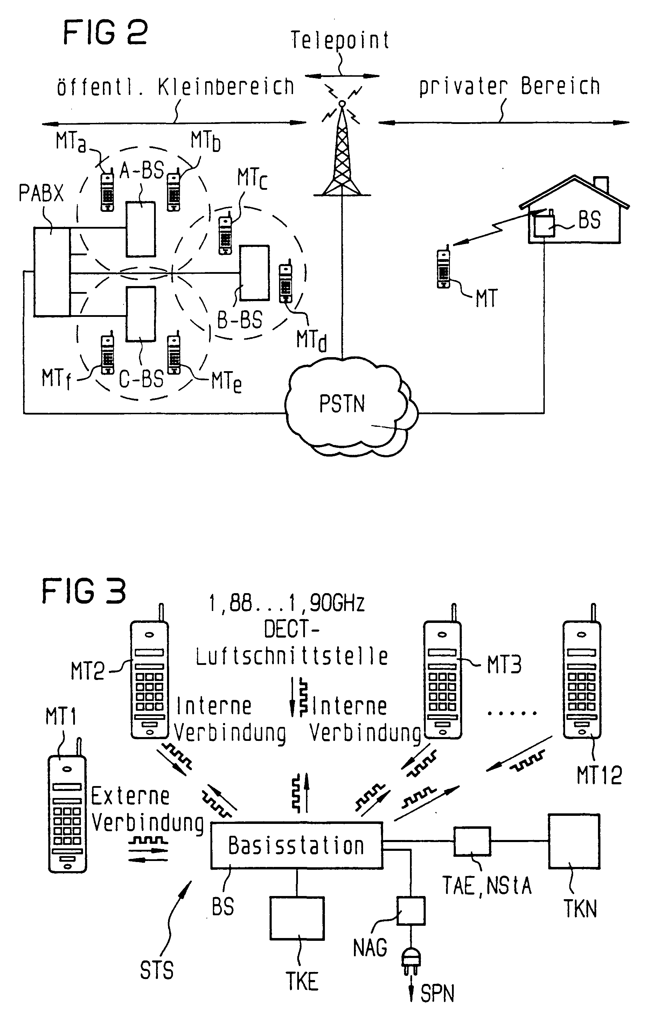

Das DECT-spezifische Schnurlos-Telefonsystem ist ein digitales System, das gemäß FIGUR 2 (vgl. tec 2/93 - Das technische Magazin von Ascom "Wege zur universellen mobilen Telekommunikation", Seiten 35 bis 42) im privaten Bereich (z. B. Haus, Wohnung, Garten etc.) im öffentlichen Kleinbereich (z. B. Firmen, Bürohäuser etc.) und als Telepoint-Anwendung eingesetzt werden kann.

Das Schnurlos-Telefonsystem besteht in seiner Grundstruktur aus einer Basisstation BS (FP= **F**ixed **P**art mit FT= **F**ixed **T**ermination) und einem mit der Basisstation BS telekommunikationsfähigen Mobilteil MT (PP= **P**ortable **P**art mit PT= **P**ortable **T**ermination). Diese Grundstruktur kann gemäß dem DECT-Standard derart erweitert werden, daß bis zu zwölf solcher Mobilteile MT einer einzigen Basisstation BS zugeordnet werden.

FIGUR 3 zeigt ein solches Schnurlos-Telefonsystem STS, bei dem an einer DECT-Basisstation BS über eine für den Frequenzbereich zwischen 1,88 und 1,90 GHz ausgelegte DECT-Luftschnittstelle maximal 12 Verbindungen nach dem TDMA/FDMA/TDD-Verfahren (**T**ime **D**ivision **M**ultiple **A**ccess/**F**requency **D**ivision **M**ultiple **A**ccess/**T**ime **D**ivision **D**uplex) parallel zu DECT-Mobilteilen MT1...MT12 aufgebaut werden. Die Zahl 12 ergibt sich aus einer Anzahl "k" von für den Duplexbetrieb eines DECT-Systems zur Verfügung stehenden Zeitschlitzen bzw. Telekommunikationskanälen (k = 12). Die Verbindungen können dabei intern und/oder extern sein. Bei einer internen Verbindung können zwei an der Basisstation BS registrierte Mobilteile, z. B. das Mobilteil MT2 und das Mobilteil MT3, miteinander kommunizieren. Für den Aufbau einer externen Verbindung ist die Basisstation BS mit einem Telekommunikationsnetz TKN, z.B. in leitungsgebundener Form über eine Telekommunikationsanschlußeinheit TAE bzw. eine Nebenstellenanlage NStA mit einem leitungsgebundenen Telekommunikationsnetz oder gemäß der WO 95/05040 in drahtloser Form als Repeaterstation mit einem übergeordneten Telekommunikationsnetz, verbunden. Bei der externen Verbindung kann man mit einem Mobilteil, z. B. mit dem Mobilteil MT1, über die Basisstation BS, die Telekommunikationsanschlußeinheit TAE bzw. Nebenstellenanlage NStA mit einem Teilnehmer in dem Telekommunikationsnetz TKN kommunizieren. Besitzt die Basisstation BS - wie im Fall des Gigaset 951 (Siemens Schnurlostelefon, vgl. telcom Report 16, (1993) Heft 1, Seiten 26 und 27 - nur einen Anschluß zu der Telekommunikationsanschlußeinheit TAE bzw. der Nebenstellenanlage NStA, so kann nur eine externe Verbindung aufgebaut werden. Hat die Basisstation BS - wie im Fall des Gigaset 952 (Siemens Schnurlostelefon; vgl. telcom Report 16, (1993), Heft 1, Seiten 26 und 27) - zwei Anschlüsse zu dem Telekommunikationsnetz TKN, so ist zusätzlich zu der externen Verbindung mit dem Mobilteil MT1 eine weitere externe Verbindung von einem an die Basisstation BS angeschlossenen leitungsgebundenen Telekommunikationsendgerät TKE möglich. Dabei ist es prinzipiell auch vorstellbar, daß ein zweites Mobilteil, z. B. das Mobilteil MT12, anstelle des Telekommunikationsendgerätes TKE den zweiten Anschluß für eine externe Verbindung nutzt. Während die Mobilteile MT1...MT12 mit einer Batterie oder einem Akkumulator betrieben werden, ist die als schnurlose Klein-Vermittlungsanlage ausgebildete Basisstation BS über ein Netzanschlußgerät NAG an ein Spannungsnetz SPN angeschlossen.

Das Schnurlos-Telefonsystem nach FIGUR 3 wird vorzugsweise in dem privaten Bereich gemäß FIGUR 2 eingesetzt.

Im öffentlichen Kleinbereich - gemäß FIGUR 2 - können mehrere solcher Schnurlos-Telefonsysteme nach FIGUR 3 als ein zellulares System an einer Nebenstellenanlage PABX (**P**rivat **A**utomatic **B**ranch E**X**change) betrieben werden, wobei die Nebenstellenanlage PABX mehrere Basisstationen A-BS, B-BS, C-BS steuert und gegebenenfalls ein Handover von einer Basisstation zu einer anderen unterstützt. In FIGUR 2 sind weiterhin sechs Mobilteile MTₐ...MT_{f} dargestellt, die den drei Basisstationen A-BS, B-BS, C-BS zugeordnet sind. Auf diese Weise ist ein zellulares Schnurlos-Telefonsystem entstanden, bei der die Telekommunikationsverbindung in der Regel über diejenige Basisstation A-BS, B-BS, C-BS geführt wird, zu dem das Mobilteil MTₐ...MT_{f} den besten Funkkontakt unterhält.

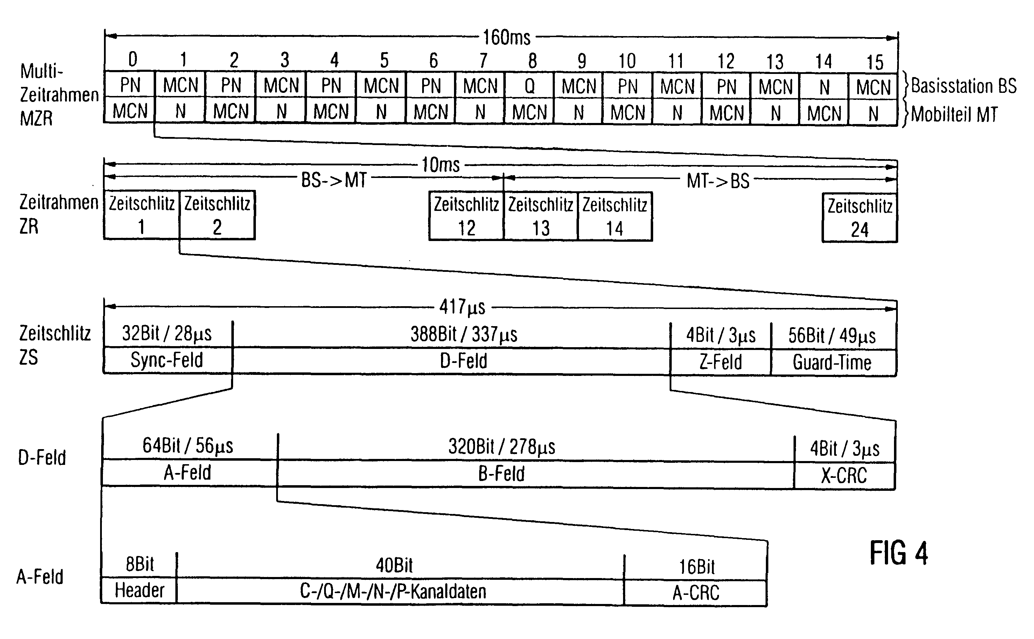

FIGUR 4 zeigt in Anlehnung an die Druckschrift "Nachrichtentechnik Elektronik 42 (1992) Jan./Feb., Nr. 1, Berlin, DE; U. Pilger: "Struktur des DECT-Standards", Seiten 23 bis 29 in Verbindung mit ETS 300 175-1...9, Oktober 1992" die TDMA-Struktur des DECT-Systems STS. Das DECT-System ist ein bezüglich der Vielfachzugriffsverfahren hybrides System, bei dem nach dem FDMA-Prinzip auf zehn Frequenzen im Frequenzband zwischen 1,88 und 1,90 GHz Funknachrichten nach dem TDMA-Prinzip gemäß FIGUR 4 in einer vorgegebenen zeitlichen Abfolge von der Basisstation BS zum Mobilteil MT und vom Mobilteil MT zur Basisstation BS (Duplex-Betrieb) gesendet werden können. Die zeitliche Abfolge wird dabei von einem Multi-Zeitrahmen MZR bestimmt, der alle 160 ms auftritt und der 16 Zeitrahmen ZR mit jeweils einer Zeitdauer von 10 ms aufweist. In diesen Zeitrahmen ZR werden nach Basisstation BS und Mobilteil MT getrennt Informationen übertragen, die einen im DECT-Standard definierten C-,M-,N-,P-,Q-Kanal betreffen. Werden in einem Zeitrahmen ZR Informationen für mehrere dieser Kanäle übertragen, so erfolgt die Übertragung nach einer Prioritätenliste mit M > C > N und P > N. Jeder der 16 Zeitrahmen ZR des Multi-Zeitrahmens MZR unterteilt sich wiederum in 24 Zeitschlitze ZS mit jeweils einer Zeitdauer von 417 µs, von denen 12 Zeitschlitze ZS (Zeitschlitze 0 ... 11) für die Übertragungsrichtung "Basisstation BS → Mobilteil MT" und weitere 12 Zeitschlitze ZS (Zeitschlitze 12 ... 23) für die Übertragungsrichtung "Mobilteil MT → Basisstation BS" bestimmt sind. In jedem dieser Zeitschlitze ZS werden nach dem DECT-Standard Informationen mit einer Bitlänge von 480 Bit übertragen. Von diesen 480 Bit werden 32 Bit als Synchronisationsinformation in einem SYNC-Feld und 388 Bit als Nutzinformation in einem D-Feld übertragen. Die restlichen 60 Bit werden als Zusatzinformationen in einem Z-Feld und als Schutzinformationen in einem Feld "Guard-Time" übertragen. Die als Nutzinformationen übertragenen 388 Bit des D-Feldes unterteilen sich wiederum in ein 64 Bit langes A-Feld, ein 320 Bit langes B-Feld und ein 4 Bit langes "X-CRC"-Wort. Das 64 Bit lange A-Feld setzt sich aus einem 8 Bit langen Datenkopf (Header), einem 40 Bit langen Datensatz mit Daten für die C-,Q-,M-,N-,P-Kanäle und einem 16 Bit langen "A-CRC"-Wort zusammen.

FIGUR 5 zeigt ausgehend von der Druckschrift Components 31 (1993), Heft 6, Seiten 215 bis 218; S. Althammer, D. Brückmann: "Hochoptimierte IC's für DECT-Schnurlostelefone" den prinzipiellen Schaltungsaufbau der Basisstation BS und des Mobilteils MT. Die Basisstation BS und das Mobilteil MT weisen danach ein Funkteil FKT mit einer zum Senden und Empfangen von Funksignalen zugeordneten Antenne ANT, eine Signalverarbeitungseinrichtung SVE und eine Zentrale Steuerung ZST auf, die in der dargestellten Weise miteinander verbunden sind. In dem Funkteil FKT sind im wesentlichen die bekannten Einrichtungen wie Sender SE, Empfänger EM und Synthesizer SYN sowie eine Feldstärkemeßeinrichtung RSSI (**R**adio **S**ignal **S**trength **I**ndicator) enthalten, die in bekannter Weise miteinander verbunden sind. In der Signalverarbeitungseinrichtung SVE ist u.a. eine Kodier-/Dekodiereinrichtung CODEC enthalten. Die Zentrale Steuerung ZST weist sowohl für die Basisstation BS als für das Mobilteil MT einen Mikroprozessor µP mit einem nach dem OSI/ISO-Schichtenmodell (vgl. **(1):** Unterrichtsblätter - Deutsche Telekom Jg. 48, 2/1995, Seiten 102 bis 11; **(2):** ETSI-Publikation ETS 300175-1...9, Oktober 1992) aufgebauten Programmodul PGM, einen Signalsteuerungsteil SST und einen Digitalen Signalprozessor DSP auf, die in der dargestellten Weise miteinander verbunden sind. Von den im Schichtenmodell definierten Schichten sind nur die unmittelbar für die Basisstation BS und das Mobilteil MT wesentlichen ersten vier Schichten dargestellt. Das Signalsteuerungsteil SST ist in der Basisstation BS als **T**ime **S**witch **C**ontroller TSC und in dem Mobilteil MT als **B**urst **M**ode **C**ontroller BMC ausgebildet. Der wesentliche Unterschied zwischen den beiden Signalsteuerungsteilen TSC, BMC besteht darin, daß der basisstationsspezifische Signalsteuerungsteil TSC gegenüber dem mobilteilspezifischen Signalsteuerungsteil BMC zusätzlich Vermittlungsfunktionen (Switch-Funktionen) übernimmt. Die Signalsteuerungsteile TSC, BMC enthalten jeweils eine Zähleinrichtung ZE mit einem Bit-, Zeitschlitz- und Zeitrahmenzähler.

Die prinzipielle Funktionsweise der vorstehend aufgeführten Schaltungseinheiten ist beispielsweise in der vorstehend zitierten Druckschrift Components 31 (1993), Heft 6, Seiten 215 bis 218 beschrieben.

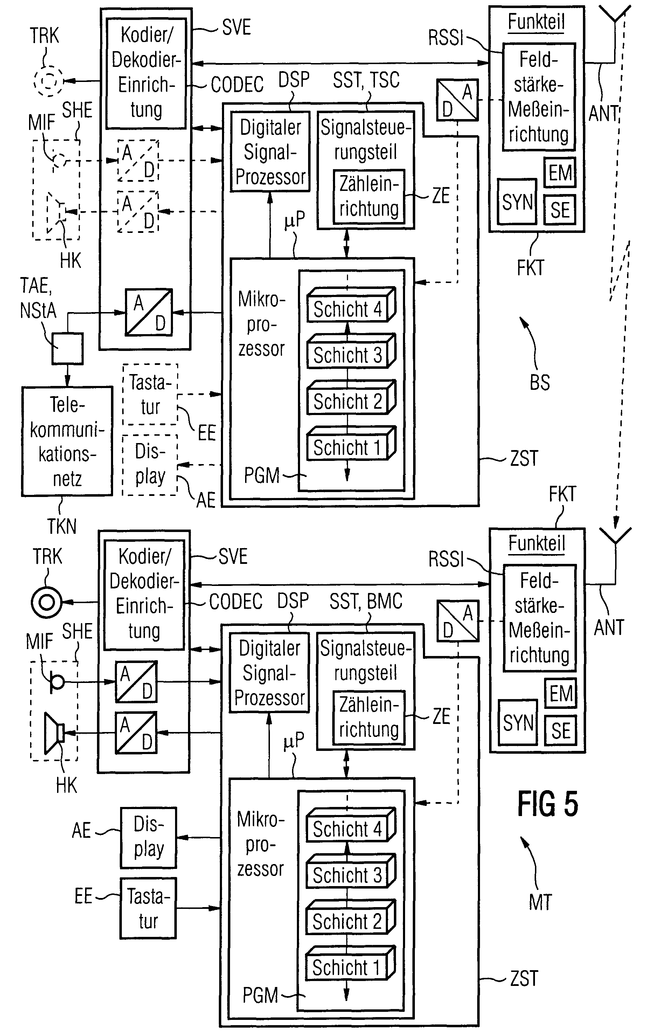

Der beschriebene Schaltungsaufbau nach FIGUR 5 wird bei der Basisstation BS und dem Mobilteil MT gemäß deren Funktion in dem DECT-System nach FIGUR 3 durch zusätzliche Funktionseinheiten ergänzt.

Die Basisstation BS ist über die Signalverarbeitungseinrichtung SVE und der Telekommunikationsanschlußeinheit TAE bzw. der Nebenstellenanlage NStA mit dem Telekommunikationsnetz TKN verbunden. Als Option kann die Basisstation BS noch eine Bedienoberfläche aufweisen (in FIGUR 5 gestrichelt eingezeichnete Funktionseinheiten), die z.B. aus einer als Tastatur ausgebildeten Eingabeeinrichtung EE, einer als Display ausgebildeten Anzeigeeinrichtung AE, einer als Handapparat mit Mikrofon MIF und Hörkapsel HK ausgebildeten Sprech/Höreinrichtung SHE sowie einer Tonrufklingel TRK betsteht.

Das Mobilteil MT weist die bei der Basisstation BS als Option mögliche Bedienoberfläche mit den zu dieser Bedienoberfläche gehörenden vorstehend beschriebenen Bedienelementen auf.

Die Nebenstellenanlage PABX gemäß FIGUR 2 ist wie die Basisstation BS im privaten Bereich mit dem leitungsgebundenen öffentlichen Telefonnetz PSTN (**P**ublic **S**witched **T**elephone **N**etwork) verbunden. Auf diese Weise kann jedermann durch die Anschaffung einer Schnurlos-Telekommunikationsanlage, bestehend aus der Nebenstellenanlage PABX und den an dieser angeschlossenen Schnurlos-Telefonen A-BS, B-BS, C-BS, MTₐ...MT_{f} zu seinem eigenen Netzbetreiber werden.

Um dabei auf eine Netz-Koordination verzichten zu können, ist gemäß dem DECT-Standard das **D**ynamic **C**hannel **A**llocation-Verfahren (DCA-Verfahren) vorgesehen. Wenn z. B. eine DECT-Verbindung aufgebaut wird, wird diejenige Frequenz und dasjenige Zeitfenster mit der geringsten Interferenz gesucht. Die Höhe (Stärke) der Interferenz hängt vorrangig davon ab, ob
(a) bereits an einer anderen Basisstation ein Gespräch geführt wird oder
(b) ein Mobilteil durch Bewegung in Sichtkontakt mit einer zuvor abgeschatteten Basisstation kommt.

Eine sich hieraus ergebende Erhöhung der Interferenz kann mit dem DECT-Schnurlostelefonsystem zugrundegelegten TDMA-Übertragungsverfahren begegnet werden. Nach dem TDMA-Verfahren wird lediglich ein Zeitschlitz für die eigentliche Übertragung gebraucht; die übrigen elf Zeitschlitze können für Messungen verwendet werden. Dadurch kann ein alternatives Frequenz/Zeitschlitzpaar ermittelt werden, auf das die Verbindung umgeschaltet werden kann. Dies geschieht im Rahmen einer adaptiven Kanalzuweisung gemäß dem DECT-Standard (vgl. (**1**) Nachrichtentechnik Elektronik 42 (Jan./Feb. 1992), No.1, Berlin; U. Pilger: "Struktur des DECT-Standards"; Seite 28 Punkt 3.2.6 und **(2)** EP-0 576 079 A1) durch ein "Connection-Handover" (Intra-Cell Handover).

Neben diesem "Intra-Cell Handover" ist noch das "Inter-Cell Handover" bzw. das seamless Handover zu nennen, das ebenfalls im Rahmen der DECT-spezifischen adaptiven Kanalzuweisung möglich ist.

Um nun insbesondere das bei zellularen drahtlosen Telekommunikationssystemen gemäß der EP-0 577 322 A1 regelmäßig auftretende "Inter-Cell Handover"-Problem in den Griff zu bekommen, muß das für solche zellularen Funk-Telekommunikationssysteme vorgesehene mobile Funkempfangsgerät (Mobilteil) zu jedem Zeitpunkt einer aktiven Telekommunikationsverbindung zu einem (quasi)stationären Funksendegerät (Basisstation) in der Lage sein, bedingt durch einen Zellenwechsel innerhalb des zellularen Funksystems die Basisstation zu wechseln (Aufbau einer Telekommunikationsverbindung zu einer anderen Basisstation) und dabei die bereits bestehende aktive Telekommunikationsverbindung unterbrechungsfrei (seamless) an die andere Basisstation weiterzureichen (seamless Handover). Aus der EP-0 577 322 A1 ist es hierzu bekannt, daß das "Handover" von den beteiligten Basisstationen und/oder von einer mit den Basisstationen verbundenen zentralen mobilen Vermittlungseinrichtung (Mobile Switching Center MSC) sowie alternativ von dem betreffenden Mobilteil selbst gesteuert wird.

Der DECT-Standard sieht hierfür gemäß der Druckschrift Nachrichtentechnik Elektronik 42 (Jan./Feb. 1992), No.1, Berlin; U. Pilger: "Struktur des DECT-Standards"; Seite 28 Punkt 3.2.6 vor, daß das Mobilteil selbständig bei einer Verschlechterung der Übertragungsqualität der bestehenden Telekommunikationsverbindung aufgrund von die Übertragungsqualität angebenden Indikatoren (z.B. Signalfeldstärke, CRC-Werte etc.) parallel zu der bestehenden Verbindung eine zweite Telekommunikationsverbindung aufbaut. Bei dieser "Inter-Cell Handover"-Prozedur wird die Tatsache, daß DECT-Mobilteile im Rahmen der dynamischen, dezentralisierten Kanalzuweisung (DCA-Verfahren) ständig über den Status der in der momentanen Umgebung verfügbaren Kanäle informiert sind, derart ausgenutzt, daß die zweite Verbindung aufgrund des Eintrages in eine Kanalliste aufgebaut wird.

Ein unterbrechungsfreies Handover ist mit der vorstehenden Prozedur nur dann möglich, wenn das Mobilteil sich in einem zellularen Funksystem mit synchronisierten Basisstationen befindet. In einem solchen synchronen zellularen Funksystem kann das Mobilteil dann zusätzlich zu der bereits bestehenden Telekommunikationsverbindung zu einer Basisstation (Ursprungs-Basisstation) mindestens eine weitere Verbindung zu einer anderen Basisstation in einer anderen Funkzelle aufbauen, ohne dabei die Synchronität zur Ursprungs-Basisstation zu verlieren. Ein solches synchrones zellulares Funksystem kann aber nur mit erheblichem Systemaufwand (Kabel- oder Funksynchronisation) realisiert werden.

Die der Erfindung zugrundeliegende Aufgabe besteht darin, mobile Funkempfangsgeräte für zellulare Funk-Telekommunikationssysteme anzugeben, die ein unterbrechungsfreies interzellulares Weiterreichen einer Telekommunikationsverbindung (seamless "inter cell-Handover") insbesondere auch dann ermöglichen, wenn in dem zellularen Funk-Telekommunikationssystem angeordnete (quasi)stationäre Funksendegeräte nicht synchronisiert sind (asynchrones Funk-Telekommunikationssystem).

Diese Aufgabe wird ausgehend von dem im Oberbegriff des Patentanspruches 1 definierten mobilen Funkempfangsgerät durch die in dem kennzeichnenden Teil des Patentanspruches 1 angegebenen Merkmale gelöst.

Das die erfindungsgemäße Aufgabe lösende mobile Funkempfangsgerät ist gegenüber bisher bekannten, eingangs beschriebenen mobilen Funkempfangsgeräten zu jeder Zeit sowie dadurch, daß insbesondere die ersten bis dritten Mittel alle für mögliche Funkverbindungen auf Frequenzen, in Zeitschlitzen und/oder in Kanälen von einem Funsendegerät gesendeten, den Aufbau von Funkverbindungen ermöglichenden Funknachrichten empfangen können in der Lage, neben einer als Telekommunikationsverbindung dienenden ersten Funkverbindung zu einem ersten (quasi) stationären Funksendegerät im Hintergrund mindestens eine als Telekommunikationsverbindung in spe dienende zweite Funkverbindung zu mindestens einem zweiten (quasi) stationären Funksendegerät insbesondere innerhalb eines asynchronen zellularen Funk-Telekommunikationssystems aufzubauen. Hierbei ist es für das vorgeschlagene Lösungsprinzip unerheblich, ob
(1) es sich bei dem zellularen drahtlosen Telekommunikationssystem um ein Funksystem nach dem DECT-Standard oder dem GSM-Standard handelt,
(2) die von den stationären Funksendegeräten den mobilen Funkempfangsgeräten gesendeten, den Funkverbindungsaufbau zwischen dem Funksendegerät und dem Funkempfangsgerät ermöglichenden Funknachrichten nach dem TDMA-Verfahren, dem CDMA-Verfahren oder einem hybriden (z.B. FDMA-/TDMA-/ CDMA-Verfahren) Zugriffsverfahren gesendet werden.

Dabei ist es gemäß Anspruch 1 (Anspruch 4) vorteilhaft, wenn das mobile Funkempfangsgerät einen DECT-spezifischen "Bearer Handover" durchführt, um das nach statischen Gesichtspunkten auftretende Ausblenden (Verdecken) anderer Funknachrichten durch die als Telekommunikationsverbindung dienende Funkverbindung zu verhindern.

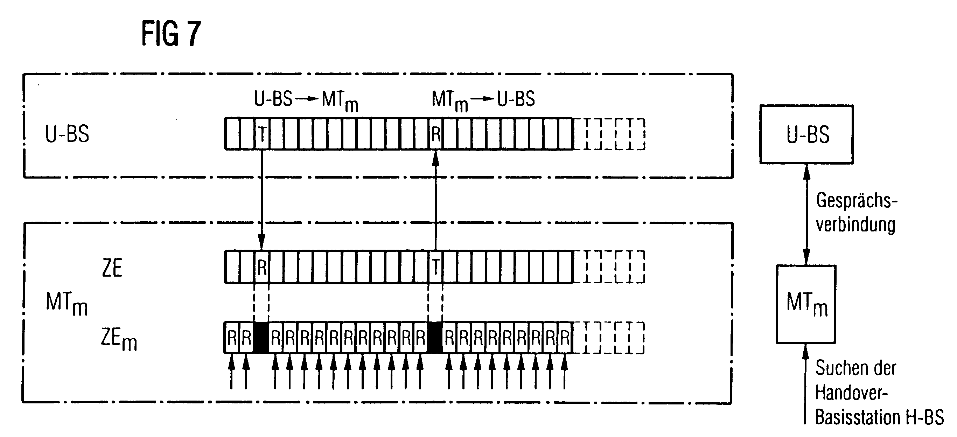

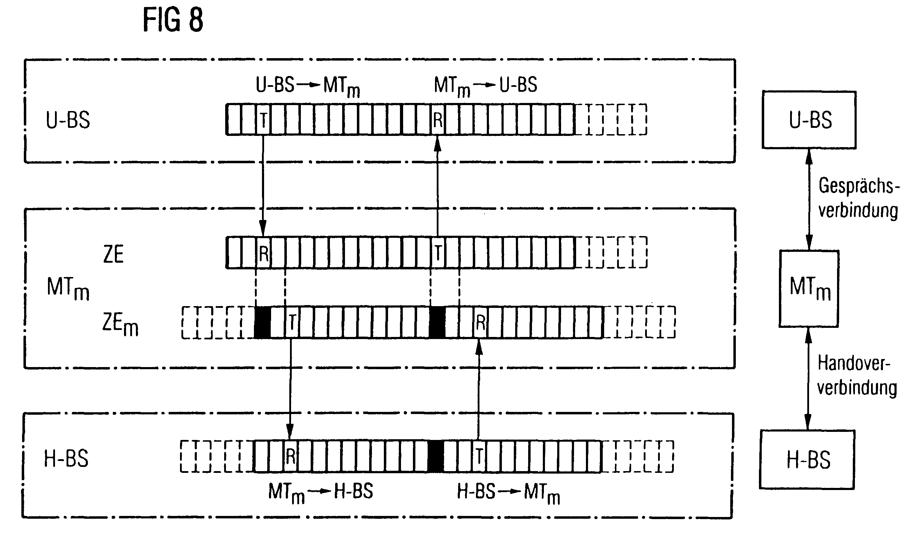

Außerdem ist es gemäß Anspruch 2 (Anspruch 5) vorteilhaft, wenn das mobile Funksende-/Funkempfangsgerät so viele Zähleinrichtungen aufweist, wie Funkverbindungen bzw. Telekommunikationsverbindungen aufgebaut werden sollen. Im Normalfall (Handover-Fall) sind in dem mobilen Funkempfangsgerät (Mobilteil) gemäß FIGUREN 7 und 8 zwei Zähleinrichtungen vorgesehen, die für den Aufbau von Telekommunikationsverbindungen zu zwei (quasi)stationären Funksendegeräten (Basisstationen) benötigt werden.

Alternativ zur Lösung gemäß Anspruch 2 (Anspruch 6) ist es auch möglich, eine einzige Zähleinrichtung in Verbindung mit einem dieser Zähleinrichtung zugeordneten Offset-Speicher in dem mobilen Funksende-/Funkempfangsgerät für den Aufbau der Telekommunikationsverbindungen vorzusehen.

Die Patentansprüche 7 bis 10 betreffen vorteilhafte Weiterbildungen der Zähleinrichtungen nach den Ansprüchen 1 und 2 (Ansprüchen 5 und 6).

Nach Anspruch 11 bzw. 12 ist es vorteilhaft, die zweite Telekommunikationsverbindung mindestens nach Überschreitung eines in bezug auf reziproke Signalfeldstärkewerte und/oder CRC-Werte definierten Schwellwertes bzw. nach Unterschreitung mindestens eines in bezug auf Signalfeldstärkewerte und/oder reziproke CRC-Werte definierten Schwellwertes aufzubauen.

Die Patentansprüche 13 bis 16 geben insbesondere vorteilhafte Weiterbildungen der Erfindung in bezug auf die Ausführungen zu Punkt (1) an. Die Patentansprüche 17 und 18 betreffen vorteilhafte Weiterbildungen des Telekommunikationsnetzes (Anspruch 12) und der im Rahmen der Telekommunikationsverbindungen übertragenen Nutzinformationen (Anspruch 18).

Weitere vorteilhafte Weiterbildungen der Erfindung sind in den übrigen Unteransprüchen angegeben.

Die Erfindung wird nachfolgend anhand eines DECT-spezifischen Ausführungsbeispieles mit den FIGUREN 6 bis 9 erläutert. Es zeigen

FIGUR 6 ausgehend von FIGUR 5 ein modifiziertes als Multisynchronisationsmobilteil (Multisync-Mobilteil) ausgebildetes Mobilteil zum Betrieb in Funk-Telekommunikationssystemen, insbesondere asynchronen Systemen,

FIGUR 7 Aufbau einer Telekommunikationsverbindung zwischen dem Multisync-Mobilteil nach FIGUR 6 und der Basisstation nach FIGUR 5 während der Situation "Multisync-Mobilteil im Suchzustand",

FIGUR 8 Aufbau von zwei Telekommunikationsverbindungen zwischen dem Multisync-Mobilteil nach FIGUR 6 und einer Ursprungsbasisstation sowie einer Handover-Basisstation nach den FIGUR 2 und 5 während der Situation "Multisync-Mobilteil während Handover",

FIGUR 9 Funktionsablaufdiagramm des Multisync-Mobilteils nach FIGUR 6 zum Aufbau der zwei Funkverbindungen nach FIGUR 8.

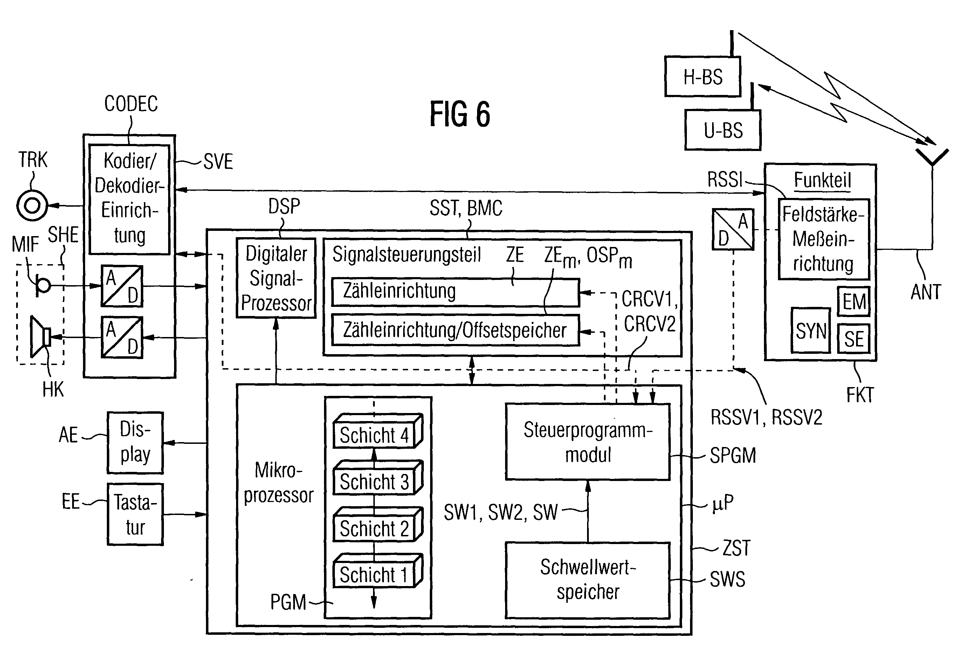

FIGUR 6 zeigt ausgehend von FIGUR 5 ein modifiziertes als Multisynchronisationsmobilteil (Multisync-Mobilteil) ausgebildetes Mobilteil MTₘ zum Betrieb in Funk-Telekommunikationssystemen, insbesondere asynchronen Systemen. Im Vergleich zu dem Mobilteil MT nach FIGUR 5 enthält das Multisync-Mobilteil MTₘ in dem Signalsteuerungsteil SST, BMC zusätzlich zu der Zähleinrichtung ZE eine weitere Zähleinrichtung ZEₘ bzw. alternativ einen z.B. als Bit-Register ausgebildeten Offset-Speicher SP. Die beiden Zähleinrichtungen ZE, ZEₘ bzw. die Zähleinrichtung ZE und der Offset-Speicher SP werden von einem Steuerprogrammodul SPGM in dem Mikroprozessor µP der Zentralen Steuerung ZST angesteuert. Diese Ansteuerung durch das Steuerprogrammodul SPGM ist abhängig von dem Vergleich zwischen einem von der Feldstärkemeßeinrichtung RSSI gemessenen und anschließend analog-digital umgesetzten Feldstärkewert RSSV1, RSSV2 (**R**adio **S**ignal **S**trength **V**alue) und einem in dem Schwellwertspeicher SWS gespeicherten feldstärkewertbezogenen Schwellwert SW1.

Die Ansteuerung der beiden Zähleinrichtungen ZE, ZEₘ bzw. der Zähleinrichtung ZE und des Offset-Speichers SP durch das Steuerprogrammmodul SPGM kann alternativ entweder in Abhängigkeit von dem Vergleich zwischen einem in der empfangenen Funknachricht enthaltenen CRC-Wert CRCV1, CRCV2 (**C**ycle **R**edundancy **C**heck **V**alue) und einem in dem Schwellwertspeicher SWS gespeicherten auf den CRC-Wert bezogenen Schwellwert SW2 oder zusätzlich in Abhängigkeit von dem Vergleich zwischen dem CRC-Wert CRCV1, CRCV2 und dem Schwellwert SW2 durchgeführt werden. Zwischen dem CRC-Wert und dem Feldstärkewert, die in der zwischen der Basisstation BS und dem Multisync-Mobilteil MTₘ übertragenen Funknachricht als Zusatzinformationen enthalten sind, besteht eine reziproke Beziehung. Mit zunehmendem Übertragungsabstand zwischen der Basisstation BS und dem Multisync-Mobilteil MTₘ wird der Feldstärkewert RSSV1, RSSV2 kleiner, während der CRC-Wert CRCV1, CRCV2 größer wird.

Durch die beiden Zähleinrichtungen ZE, ZEₘ und deren Ansteuerung durch das Steuerprogrammodul SPGM ist das Multisync-Mobilteil MTₘ in der Lage, zwei Telekommunikationsverbindungen zu zwei Basisstationen unabhängig voneinander aufzubauen, die z.B. gemäß FIGUR 2 zu unterschiedlichen Funkzellen gehören. Hierdurch wird ein unterbrechungsfreier Funkzellenwechsel während eines Gespräches ermöglicht. So ist es z.B. möglich, eine Gesprächsverbindung zu einer Ursprungsbasisstation U-BS zu unterhalten und gleichzeitig im Hintergrund eine Handover-Verbindung zu einer Handover-Basisstation H-BS aufzubauen. Für diesen Aufbau der Telekommunikationsverbindungen ist es unerheblich, ob die beiden Basissationen synchronisiert oder nicht synchronisiert sind. Mit anderen Worten Multisync-Mobilteil MTₘ ist in der Lage, die Telekommunikationsverbindungen sowohl in einem synchronen drahtlosen zellularen Telekommunikationssystem als auch in einem asynchronen drahtlosen zellularen Telekommunikationssystem aufzubauen.

Die Suche nach der Handover-Basisstation H-BS kann in vorteilhafter Weise in Abhängigkeit von dem Überschreiten eines in bezug auf reziproke Signalfeldstärkewerte und/oder CRC-Werte definierten Schwellwertes SW bzw. nach Unterschreitung eines in bezug auf Signalfeldstärkewerte und/oder reziproke CRC-Werte definierten Schwellwertes SW veranlaßt werden.

Dabei ergeben sich folgende Vorteile. Es ist ein Einsatz von Standardbasisstationen ohne Funk- bzw. Kabelsynchronisation möglich. Weiterhin kann nachträglich eine Systemerweiterung mit einem Multisync-Mobilteil erreicht werden, ohne daß bereits bestehende Systeme auszutauschen bzw. anzupassen sind. Anwender bzw. Benutzer eines solchen Mobilteils, die Bedarf für einen Zellenwechsel während des Gesprächs haben, können mit einem solchen Multisync-Mobilteil ausgerüstet werden, ohne daß das restliche System beeinflußt wird.

Wie das Multisync-Mobilteil MTₘ diese Telekommunikationsverbindungen im einzelnen aufbaut, wird ausgehend von FIGUR 4 anhand der FIGUREN 7 bis 9 erläutert.

FIGUR 7 zeigt die Situation, wenn das Multisync-Mobilteil MTₘ während der Gesprächsverbindung zu der Ursprungsbasisstation U-BS nach der Handover-Basisstation H-BS sucht.

Durch die Zähleinrichtung ZE im Signalsteuerungsteil SST, BMC nach FIGUR 5 hat das Multisync-Mobilteil MTₘ auf den Zeitschlitzen 3 und 15 eine Duplex-Telekommunikationsverbindung zu der Ursprungsbasisstation U-BS.

Durch die weitere Zähleinrichtung ZEₘ im Signalsteuerungsteil SST, BMC nach FIGUR 5 hat das Multisync-Mobilteil MTₘ auf den restlichen verbleibenden Zeitschlitzen - dies sind die Zeitschlitze 1, 2, 4 bis 14 und 16 bis 24 - die Möglichkeit nach der Handover-Basisstation H-BS zu suchen. Dabei werden von dem Multisync-Mobilteil MTₘ außer den zwei für die eigene Verbindung belegten Zeitschlitzen alle restlichen Zeitschlitze auf Empfang geschaltet, um so unabhängig von der zeitlichen Lage eine zweite Funkzelle empfangen zu können. Da fremde Funkzellen, deren Träger während des eigenen Zeitschlitzes gesendet werden, nicht empfangen werden können, ist durch eine entsprechende Steuerung der eigenen Verbindung eine Überlappung der Zeitschlitze zu verhindern. Dies kann durch einen entsprechenden Zeitschlitzwechsel der eigenen Verbindung durch das Multisync-Mobilteil MTₘ gesteuert werden (Bearer Handover).

FIGUR 8 zeigt die Situation, wenn das Multisync-Mobilteil MTₘ während der Gesprächsverbindung zu der Ursprungsbasisstation U-BS eine Handover-Verbindung zu der Handover-Basisstation H-BS durchführt. Die Zeitbasen der beiden Basisstationen U-BS, H-BS driften auseinander (zeitliche Versetzung der Zeitrahmen). Mit anderen Worten die Basisstationen U-BS, H-BS sind asynchron. Im vorliegenden Fall wird mit der Zähleinrichtung ZEₘ z.B. auf den Zeitschlitzen 4 und 16 eine Duplex- Telekommunikationsverbindung zwischen der Handover-Basisstation H-BS und dem Multisync-Mobilteil MTₘ hergestellt.

Das Herstellen der Duplex-Telekommunikationsverbindung zur Handover-Basisstation H-BS kann wieder in vorteilhafter Weise schwellwertbezogen erfolgen. Dazu bieten sich prinzipiell zwei Möglichkeiten an.

Die erste Möglichkeit besteht darin, daß in Abhängigkeit von dem Überschreiten des in bezug auf reziproke Signalfeldstärkewerte und/oder CRC-Werte definierten Schwellwertes SW bzw. nach Unterschreitung eines in bezug auf Signalfeldstärkewerte und/oder reziproke CRC-Werte definierten Schwellwertes SW die Duplex-Telekommunikationsverbindung hergestellt wird.

Die zweite Möglichkeit besteht darin, daß in Abhängigkeit von dem Überschreiten eines in bezug auf reziproke Signalfeldstärkewerte und/oder CRC-Werte definierten weiteren Schwellwertes SW bzw. nach Unterschreitung eines in bezug auf Signalfeldstärkewerte und/oder reziproke CRC-Werte definierten weiteren Schwellwertes SW die Duplex-Telekommunikationsverbindung hergestellt wird.

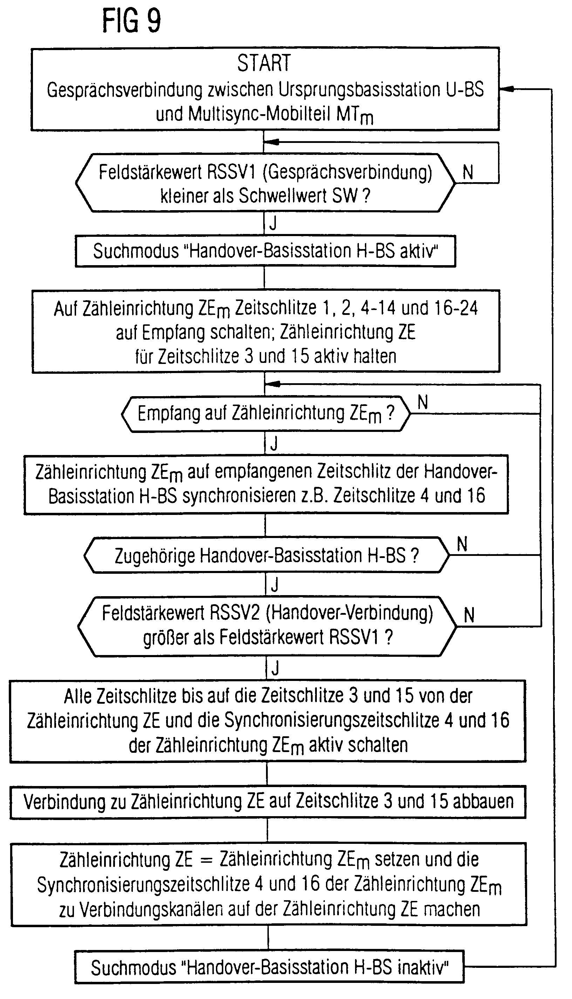

FIGUR 9 zeigt ausgehend von den FIGUREN 6 bis 8 mit den vorstehend skizzierten Alternativen ein mögliches Ablaufdiagramm für das Multisync-Mobilteil MTₘ zum Suchen der Handover-Basisstation H-BS und zum Herstellen der Duplex-Telekommunikationsverbindung zu dieser Handover-Basisstation H-BS.

Während der Suchmodus aktiv ist, werden alle HF- und DECT-Steuersignale aus der Zähleinrichtung ZEₘ und den zugehörigen Steuerregistern abgeleitet, mit der Ausnahme, daß für den aktiven Verbindungskanal auf der Zähleinrichtung ZE, z. B. Zeitschlitz 3 und 15, auf die Zähleinrichtung ZE umgeschaltet wird und die HF- und DECT-Steuersignale von der Zähleinrichtung ZE und dessen Steuersignalen abgeleitet wird. Ist der Suchmodus inaktiv, werden alle HF- und DECT-Steuersignale ausschließlich aus der Zähleinrichtung ZE und dessen Steuersignale abgeleitet. Die Zähleinrichtung ZEₘ besteht grundsätzlich aus Bit-, Zeitschlitz- und Zeitrahmenzähler (Bit 0 bis 480, Zeitschlitz 1 bis 24, Zeitrahmen 0 bis 15), wobei durch eine Offsetsteuerung der Software es möglich ist, den Zeitrahmenzähler bzw. den Zeitschlitz- und Zeitrahmenzähler entfallen zu lassen.

Alternativ zu der vorstehend beschriebenen Ausführungsform ist ausgehend von FIGUR 6 auch folgende Ausführungsform möglich, bei der die Zähleinrichtung ZEₘ durch einen als Register ausgebildeten Offset-Speicher OSPₘ ersetzt ist.

Synchronisiert sich ein Mobilteil bei der Suche nach einer Handover-Basisstation, so wird der aktuelle Bitwert der Zähleinrichtung ZE in dem Register OSPₘ gesichert. Dieses Register muß theoretisch 9-Bit groß sein, um den maximalen Bit-Counter-Wert eines Zeitschlitzes (480 Bit) speichern zu können. Da aber üblicherweise mit einem Synchronisationsfenster kleiner ± 32 Bit gearbeitet wird, reicht es aber auch aus, die letzten 6 Bits der Zähleinrichtung ZE zu sichern. Die normale Synchronisations-Position ist am Ende des Sync-Wortes, bei der Bit-Position 32 (dezimal) bzw. 000100000 (binär). Um diese Position liegt jetzt üblicherweise ein Sync-Fenster (z. B. ± 4 Bit oder ± 8 Bit), in der eine Synchronisation erlaubt ist. Erfolgt jetzt eine Synchronisation, innerhalb dieses Fensters, auf eine fremde Basisstation (Handover-Basisstation), so erfährt das Mobilteil eine Verschiebung zur Ursprungsbasisstation. Erfolgt z. B. die Synchronisation an Bit-Position 28 (dezimal) bzw. 011100 (binär), so werden die 6 Register mit diesen Werten beschrieben. Das Mobilteil hat jetzt eine Verschiebung von 4 Bit zur Ursprungs-basisstation. An einer fest definierten Stelle der Zähleinrichtung ZE, an der die letzten 6 Bits wieder den Wert 32 (dezimal) bzw. 10000000 (binär) annehmen, kann nun die alte in dem Register OSPₘ gespeicherte Sync-Position im Beispiel der Wert 28 (dezimal) bzw. 01100 (binär) auf die Zähleinrichtung ZE zurückgeladen werden. Dies kann z. B. in dem Guard-Feld (Guard Time) unter der Bit-Position 464 (dezimal) 1110100000 (binär) im gleichen Zeitschlitz erfolgen. Wird z.B. mit einem "slow-hopping"-Funkteil gearbeitet, das ohnehin nur jeden zweiten Zeitschlitz belegen kann, ist auch eine Rücksynchronisation im direkt nachfolgenden inaktiven Zeitschlitz, z. B. an der erwarteten Sync-Position möglich.

In einem zeitschlitzbezogenen Register kann durch ein Bit gekennzeichnet werden, in welchem Zeitschlitz eine Synchronisation dauerhaft Auswirkung auf die Zähleinrichtung ZE haben soll und in welchem Zeitschlitz eine Rücksynchronisation auf den alten Bitwert der Zähleinrichtung ZE erfolgen soll.

Es ist ebenfalls möglich, anstatt eines 6-Bit-Registers einen 9-Bit-Zähler (bis 480 dezimal) parallel zur Zähleinrichtung ZE mitlaufen zu lassen. In einem Zeitschlitz, in dem keine dauerhafte Synchronisation erfolgen soll, kann dieser Zähler ohne Nachsynchronisation weiterlaufen. An einer geeigneten Stelle, z. B. in dem Guard-Feld (Guard-Time) kann dieser Zählerwert auf die Zähleinrichtung ZE zurückgeladen werden. In einem zu synchronisierenden Zeitschlitz wird dieser Zähler wieder zur Zähleinrichtung ZE und mit dem Empfang des Sync-Wortes nachsynchronisiert.

In beiden Fällen wird somit erreicht, daß das Mobilteil die Synchronisationsposition der Original-Basisstation auch bei mehrfacher Synchronisation innerhalb des Sync-Fensters innerhalb eines Zeitrahmens beibehält.

## Patentansprüche

1. Mobiles Funkempfangsgerät für zellulare Funk-Telekommunikationssysteme, das
(a) mit einer Vielzahl von quasi-stationären Funksendegeräten (U-BS, H-BS) telekommunikationsfähig ist, wobei die quasi-stationären Funksendegeräte (U-BS, H-BS)
(a1) in Funkzellen des Funk-Telekommunikationssystems zum funkzellenbezogenen Senden von in einer Multiplexstruktur (MZR, ZR, ZS) mit mehreren Strukturelementen (ZS) eingebundenen, den Telekommunikationverbindungsaufbau zwischen dem Funksendegeräte (U-BS, H-BS) und dem Funkempfangsgerät (MTₘ) ermöglichenden Funknachrichten angeordnet sind,
(a2) über eine Vermittlungseinrichtung (PABX) jeweils zueinander synchron oder asynchron an ein Telekommunikationsnetz (TKN) angeschlossen sind,
(b) eine Funktionseinheit aus folgenden Mitteln aufweist:
(b1) erste Mittel (FKT) zum Empfangen und Bearbeiten der Funknachrichten,
(b2) zweite Mittel (SST, BMC) zum Herstellen und Steuern der Funkverbindungen zu den quasi-stationären Funksendegeräten (U-BS, H-BS),
(b3) dritte Mittel (ZST, µP, SPGM, SWS) zum Erfassen und Auswerten von die Funkverbindungsqualität angebenden, in den Funknachrichten enthaltenen Zusatzinformationen (RSSV1, RSSV2, CRCV1, CRCV2)
(c) aufgrund des Empfangs einer ersten in ersten Struktur elementen (ZS3, ZS15) der Multiplexstruktur (MZR, ZR, ZS) eingebundenen Funknachricht eine erste Funkverbindung zu einem ersten quasi-stationären Funksendegerät (U-BS) herstellt und unterhält, die als Telekommunikationsverbindung dient,
**dadurch gekennzeichnet, daß**
(d) die ersten bis dritten Mittel (FKT, SST, BMC, ZST, µP, SPGM, SWS) derart ausgebildet und miteinander verbunden sind, daß
(d1) zusätzlich zu der ersten Funkverbindung im Hintergrund aufgrund des Empfangs von in zweiten bis n-ten Strukturelementen (ZS1, ZS2, ZS4...ZS14, ZS16...ZS24) der Multiplexstruktur (MZR, ZR) eingebundenen Funknachrichten mindestens eine zweite Funkverbindung zu mindestens einem zweiten quasi-stationären Funksendegerät (H-BS) hergestellt und unterhalten wird, die als Telekommunikationsverbindung in spe dient,
(d2) in Abhängigkeit von dem Vergleich zwischen der Verbindungsqualität der ersten Funkverbindung und der Verbindungsqualität der zweiten Funkverbindung, wobei die jeweilige Verbindungsqualität aus der Auswertung der jeweiligen funkverbindungsspezifischen Zusatzinformationen (RSSV1, RSSV2, CRCV1, CRCV2) ermittelt wird, entweder die erste Funkverbindung weiterhin als Telekommunikationsverbindung dient oder die zweite Funkverbindung als neue Telekommunikationsverbindung dient,
(e) die ersten bis dritten Mittel (FKT, SST, BMC, ZST, µP, SPGM, SWS) derart ausgebildet sind, daß durch einen als Bearer Handover bezeichneten zyklischen Empfangswechsel von der ersten in dem ersten Strukturelement (ZS3, ZS15) der Multiplexstruktur (MZR, ZR, ZS) eingebundenen Funknachricht auf eine der in den zweiten bis n-ten Strukturelementen (ZS1, ZS2, ZS4...ZS14, ZS16...ZS24) der Multiplexstruktur (MZR, ZR, ZS) eingebundenen Funknachrichten die erste Funkverbindung zu dem ersten quasi-stationären Funksendegerät (U-BS) gesteuert wird.

2. Mobiles Funkempfangsgerät für zellulare Funk-Telekommunikationssysteme, das
(a) mit einer Vielzahl von quasi-stationären Funksendegeräten (U-BS, H-BS) telekommunikationsfähig ist, wobei die quasi-stationären Funksendegeräte (U-BS, H-BS)
(a1) in Funkzellen des Funk-Telekommunikationssystems zum funkzellenbezogenen Senden von in einer Multiplexstruktur (MZR, ZR, ZS) mit mehreren Strukturelementen (ZS) eingebundenen, den Telekommunikationverbindungsaufbau zwischen dem Funksendegeräte (U-BS, H-BS) und dem Funkempfangsgerät (MTₘ) ermöglichenden Funknachrichten angeordnet sind,
(a2) über eine Vermittlungseinrichtung (PABX) jeweils zueinander synchron oder asynchron an ein Telekommunikationsnetz (TKN) angeschlossen sind,
(b) eine Funktionseinheit aus folgenden Mitteln aufweist:
(b1) erste Mittel (FKT) zum Empfangen und Bearbeiten der Funknachrichten,
(b2) zweite Mittel (SST, BMC) zum Herstellen und Steuern der Funkverbindungen zu den quasi-stationären Funksendegeräten (U-BS, H-BS),
(b3) dritte Mittel (ZST, µP, SPGM, SWS) zum Erfassen und Auswerten von die Funkverbindungsqualität angebenden, in den Funknachrichten enthaltenen Zusatzinformationen (RSSV1, RSSV2, CRCV1, CRCV2)
(c) aufgrund des Empfangs einer ersten in ersten Struktur elementen (ZS3, ZS15) der Multiplexstruktur (MZR, ZR, ZS) eingebundenen Funknachricht eine erste Funkverbindung zu einem ersten quasi-stationären Funksendegerät (U-BS) herstellt und unterhält, die als Telekommunikationsverbindung dient,
**dadurch gekennzeichnet, daß**
(d) die ersten bis dritten Mittel (FKT, SST, BMC, ZST, µP, SPGM, SWS) derart ausgebildet und miteinander verbunden sind, daß
(d1) zusätzlich zu der ersten Funkverbindung im Hintergrund aufgrund des Empfangs von in zweiten bis n-ten Strukturelementen (ZS1, ZS2, ZS4...ZS14, ZS16...ZS24) der Multiplexstruktur (MZR, ZR) eingebundenen Funknachrichten mindestens eine zweite Funkverbindung zu mindestens einem zweiten quasi-stationären Funksendegerät (H-BS) hergestellt und unterhalten wird, die als Telekommunikationsverbindung in spe dient,
(d2) in Abhängigkeit von dem Vergleich zwischen der Verbindungsqualität der ersten Funkverbindung und der Verbindungsqualität der zweiten Funkverbindung, wobei die jeweilige Verbindungsqualität aus der Auswertung der jeweiligen funkverbindungsspezifischen Zusatzinformationen (RSSV1, RSSV2, CRCV1, CRCV2) ermittelt wird, entweder die erste Funkverbindung weiterhin als Telekommunikationsverbindung dient oder die zweite Funkverbindung als neue Telekommunikationsverbindung dient,
(e) die zweiten Mittel (SST, BMC) eine der Anzahl der Funkverbindungen entsprechende Anzahl von Zähleinrichtungen (ZE, ZEₘ) aufweisen.

3. Mobiles Funkempfangsgerät für zellulare Funk-Telekommunikationssysteme, das
(a) mit einer Vielzahl von quasi-stationären Funksendegeräten (U-BS, H-BS) telekommunikationsfähig ist, wobei die quasi-stationären Funksendegeräte (U-BS, H-BS)
(a1) in Funkzellen des Funk-Telekommunikationssystems zum funkzellenbezogenen Senden von in einer Multiplexstruktur (MZR, ZR, ZS) mit mehreren Strukturelementen (ZS) eingebundenen, den Telekommunikationverbindungsaufbau zwischen dem Funksendegeräte (U-BS, H-BS) und dem Funkempfangsgerät (MTₘ) ermöglichenden Funknachrichten angeordnet sind,
(a2) über eine Vermittlungseinrichtung (PABX) jeweils zueinander synchron oder asynchron an ein Telekommunikationsnetz (TKN) angeschlossen sind,
(b) eine Funktionseinheit aus folgenden Mitteln aufweist:
(b1) erste Mittel (FKT) zum Empfangen und Bearbeiten der Funknachrichten,
(b2) zweite Mittel (SST, BMC) zum Herstellen und Steuern der Funkverbindungen zu den (quasi)stationären Funksendegeräten (U-BS, H-BS),
(b3) dritte Mittel (ZST, µP, SPGM, SWS) zum Erfassen und Auswerten von die Funkverbindungsqualität angebenden, in den Funknachrichten enthaltenen Zusatzinformationen (RSSV1, RSSV2, CRCV1, CRCV2)
(c) aufgrund des Empfangs einer ersten in ersten Struktur elementen (ZS3, ZS15) der Multiplexstruktur (MZR, ZR, ZS) eingebundenen Funknachricht eine erste Funkverbindung zu einem ersten quasi-stationären Funksendegerät (U-BS) herstellt und unterhält, die als Telekommunikationsverbindung dient,
**dadurch gekennzeichnet, daß**
(d) die ersten bis dritten Mittel (FKT, SST, BMC, ZST, µP, SPGM, SWS) derart ausgebildet und miteinander verbunden sind, daß
(d1) zusätzlich zu der ersten Funkverbindung im Hintergrund aufgrund des Empfangs von in zweiten bis n-ten Strukturelementen (ZS1, ZS2, ZS4...ZS14, ZS16...ZS24) der Multiplexstruktur (MZR, ZR) eingebundenen Funknachrichten mindestens eine zweite Funkverbindung zu mindestens einem zweiten quasi-stationären Funksendegerät (H-BS) hergestellt und unterhalten wird, die als Telekommunikationsverbindung in spe dient,
(d2) in Abhängigkeit von dem Vergleich zwischen der Verbindungsqualität der ersten Funkverbindung und der Verbindungsqualität der zweiten Funkverbindung, wobei die jeweilige Verbindungsqualität aus der Auswertung der jeweiligen funkverbindungsspezifischen Zusatzinformationen (RSSV1, RSSV2, CRCV1, CRCV2) ermittelt wird, entweder die erste Funkverbindung weiterhin als Telekommunikationsverbindung dient oder die zweite Funkverbindung als neue Telekommunikationsverbindung dient,
(e) die zweiten Mittel (SST, BMC) eine Zähleinrichtung (ZE) und einen diese Zähleinrichtung (ZE) zugeordneten Offset-Speicher (OSPₘ) aufweisen.

4. Mobiles Funkempfangsgerät für zellulare Funk-Telekommunikationssysteme nach Anspruch 2 oder 3, **dadurch gekennzeichnet, daß**
die ersten bis dritten Mittel (FKT, SST, BMC, ZST, µP, SPGM, SWS) derart ausgebildet sind, daß durch einen als Bearer Handover bezeichneten zyklischen Empfangswechsel von der ersten in dem ersten Strukturelement (ZS3, ZS15) der Multiplexstruktur (MZR, ZR, ZS) eingebundenen Funknachricht auf eine der in den zweiten bis n-ten Strukturelementen (ZS1, ZS2, ZS4...ZS14, ZS16...ZS24) der Multiplexstruktur (MZR, ZR, ZS) eingebundenen Funknachrichten die erste Funkverbindung zu dem ersten quasi-stationären Funksendegerät (U-BS) gesteuert wird.

5. Mobiles Funkempfangsgerät für zellulare Funk-Telekommunikationssysteme nach Anspruch 1, **dadurch gekennzeichnet, daß**
die zweiten Mittel (SST, BMC) eine der Anzahl der Funkverbindungen entsprechende Anzahl von Zähleinrichtungen (ZE, ZEₘ) aufweisen.

6. Mobiles Funkempfangsgerät für zellulare Funk-Telekommunikationssysteme nach Anspruch 1, **dadurch gekennzeichnet, daß**
die zweiten Mittel (SST, BMC) eine Zähleinrichtung (ZE) und einen dieser Zähleinrichtung (ZE) zugeordneten Offset-Speicher (OSPₘ) aufweisen.

7. Mobiles Funkempfangsgerät für zellulare Funk-Telekommunikationssysteme nach Anspruch 5, **dadurch gekennzeichnet, daß**
die Zähleinrichtungen (ZE, ZEₘ) jeweils aus einem Bit-, Zeitschlitz- und Zeitrahmenzähler bestehen.

8. Mobiles Funkempfangsgerät für zellulare Funk-Telekommunikationssysteme nach Anspruch 6, **dadurch gekennzeichnet, daß**
die Zähleinrichtung (ZE) als Bitzähler ausgebildet ist und der Offset-Speicher (OSPₘ) die Funktionen eines Zeitschlitz- und Zeitrahmenzählers übernimmt.

9. Mobiles Funkempfangsgerät für zellulare Funk-Telekommunikationssysteme nach einem der Ansprüche 5 bis 8, **dadurch gekennzeichnet, daß**
die Zähleinrichtung (ZE, ZEₘ) und ggf. der Offset-Speicher (OSPₘ) als Software-Module ausgebildet sind.

10. Mobiles Funkempfangsgerät für zellulare Funk-Telekommunikationssysteme nach einem der Ansprüche 5 bis 8, **dadurch gekennzeichnet, daß**
die Zähleinrichtung (ZE, ZEₘ) und ggf. der Offset-Speicher (OSPₘ) als Hardware-Module ausgebildet sind.

11. Mobiles Funkempfangsgerät für zellulare Funk-Telekommunikationssysteme nach einem der Ansprüche 1 bis 10, **dadurch gekennzeichnet, daß**
die ersten bis dritten Mittel (FKT, SST, BMC, ZST, µP, SPGM, SWS) derart ausgebildet und miteinander verbunden sind, daß die zweite/n Funkverbindung/en zu dem/den zweiten quasi-stationären Funksendegerät/en (H-BS) in Abhängigkeit von dem Überschreiten mindestens eines vorgegebenen zusatzinformationsbezogenen Schwellwertes (SW) durch einen Zusatzinformationswert (RSSV1, CRCV1), der sich aus den über die erste Funkverbindung mit den Funknachrichten empfangenen Zusatzinformationen ergibt, hergestellt und unterhalten wird.

12. Mobiles Funkempfangsgerät für zellulare Funk-Telekommunikationssysteme nach einem der Ansprüche 1 bis 10, **dadurch gekennzeichnet, daß**
die ersten bis dritten Mittel (FKT, SST, BMC, ZST, µP, SPGM, SWS) derart ausgebildet und miteinander verbunden sind, daß die zweite/en Funkverbindung/en zu dem/den zweiten quasi-stationären Funksendegerät/en (H-BS) in Abhängigkeit von dem Unterschreiten mindestens eines vorgegebenen zusatzinformationsbezogenen Schwellwertes (SW) durch einen Zusatzinformationswert (RSSV1, CRCV1), der sich aus den über die erste Funkverbindung mit den Funknachrichten empfangenen Zusatzinformationen ergibt, hergestellt und unterhalten wird.

13. Mobiles Funkempfangsgerät für zellulare Funk-Telekommunikationssysteme nach einem der Ansprüche 1 bis 12, **dadurch gekennzeichnet, daß**
das zellulare Funk-Telekommunikationssystem als zellulares Schnurlos-Telekommunikationssystem, das quasi-stationäre Funksendegerät (U-BS, H-BS) als Schnurlos-Basisstation und das mobile Funkempfangsgerät (MTₘ) als Schnurlos-Mobilteil ausgebildet sind.

14. Mobiles Funkempfangsgerät für zellulare Funk-Telekommunikationssysteme nach Anspruch 13, **dadurch gekennzeichnet, daß**
die Schnurlos-Basisstation (U-BS, H-BS) und das Schnurlos-Mobilteil (MTₘ) als Schnurlosgeräte zur Übertragung von Funknachrichten nach dem DECT-Standard ausgebildet sind.

15. Mobiles Funkempfangsgerät für zellulare Funk-Telekommunikationssysteme nach einem der Ansprüche 1 bis 12, **dadurch gekennzeichnet, daß**
das zellulare Funk-Telekommunikationssystem als zellulares Mobilfunk-Telekommunikationssystem, das quasi-stationäre Funksendegerät (U-BS, H-BS) als Mobilfunk-Basisstation und das mobile Funkempfangsgerät (MTₘ) als Mobilfunk-Mobilteil ausgebildet sind.

16. Mobiles Funkempfangsgerät für zellulare Funk- Telekommunikationssysteme nach Anspruch 15, **dadurch gekennzeichnet, daß**
die Mobilfunk-Basisstation (U-BS, H-BS) und das Mobilfunk-Mobilteil (MTₘ) als Mobilfunkgeräte zur Übertragung von Funknachrichten nach dem GSM-Standard ausgebildet sind.

17. Mobiles Funkempfangsgerät für zellulare Funk-Telekommunikationssysteme nach einem der Ansprüche 1 bis 16, **dadurch gekennzeichnet, daß**
das Telekommunikationsnetz (TKN) als öffentliches Fernsprechnetz (PSTN), ISDN-Netz, privates Telekommunikationsnetz (PTN), Mobil- oder Satellitenfunknetz und die Vermittlungseinrichtung (PABX) als private Nebenstellenanlage (PABX) ausgebildet ist.

18. Mobiles Funkempfangsgerät für zellulare Funk-Telekommunikationssysteme nach einem der Ansprüche 1 bis 17, **dadurch gekennzeichnet, daß**
die im Rahmen der Telekommunikationsverbindung übertragenen Nutzinformationen gesprochene Worte, geschriebene Worte und/oder Bilder repräsentieren.

19. Mobiles Funkempfangsgerät für zellulare Funk-Telekommunikationssysteme nach einem der Ansprüche 1 bis 18, **dadurch gekennzeichnet, daß**
die Multiplexstruktur (MZR, ZR, ZS) als FDMA/TDMA/TDD-Struktur ausgebildet ist und die in der Multiplexstruktur (MZR, ZR, ZS) enthaltenen Strukturelemente (ZS) als Zeitschlitze/Kanäle ausgebildet sind.

## Claims

1. Mobile radio receiver for cellular radio telecommunications systems, which
(a) can communicate with a large number of quasi-stationary radio transmitters (U-BS, H-BS), the quasi-stationary radio transmitters (U-BS, H-BS)
(a1) being arranged in radio cells of the radio telecommunications system for radio-cell-related transmission of radio messages which are included in a multiplex structure (MZR, ZR, ZS) having a plurality of structure elements (ZS) and allow telecommunications connections to be set up between the radio transmitters (U-BS, H-BS) and the radio receiver (MTₘ),
(a2) are each connected to a telecommunications network (TKN), synchronously or asynchronously with respect to one another, via a switching centre (PABX),
(b) has a functional unit comprising the following means:
(b1) first means (FKT) for receiving and processing the radio messages,
(b2) second means (SST, BMC) for producing and controlling the radio links to the quasi-stationary radio transmitters (U-BS, H-BS),
(b3) third means (ZST, µP, SPGM, SWS) for detecting and evaluating additional information (RSSV1, RSSV2, CRCV1, CRCV2) which indicates the radio link quality and is contained in the radio messages
(c) produces and maintains a first radio link to a first quasi-stationary radio transmitter (U-BS) on the basis of receiving a first radio message which is included in first structure elements (ZS3, ZS15) of the multiplex structure (MZR, ZR, ZS), this first radio link being used as a telecommunications link,
**characterized in that**
(d) the first to third means (FKT, SST, BMC, ZST, µP, SPGM, SWS) are designed and connected to one another in such a manner that
(d1) in addition to the first radio link, at least one second radio link to at least one second quasi-stationary radio transmitter (H-BS) is produced and maintained in the background on the basis of receiving radio messages which are included in the second to n-th structure elements (ZS1, ZS2, ZS4...ZS14, ZS16...ZS24) of the multiplex structure (MZR, ZR), which second radio link is intended to be used as a telecommunications link,
(d2) depending on the comparison between the link quality of the first radio link and the link quality of the second radio link, the respective link quality being determined from the evaluation of the respective radio-link-specific additional information (RSSV1, RSSV2, CRCV1, CRCV2), either the first radio link continues to be used as the telecommunications link, or the second radio link is used as a new telecommunications link,
(e) the first to third means (FKT, SST, BMC, ZST, µP, SPGM, SWS) are designed in such a manner that the first radio link to the first quasi-stationary radio transmitter (U-BS) is controlled by a cyclic reception change, referred to as a bearer handover, from the first radio message, which is included in the first structure element (ZS3, ZS15) of the multiplex structure (MZR, ZR, ZS), to one of the radio messages which are included in the second to n-th structure elements (ZS1, ZS2, ZS4...ZS14, ZS16...ZS24) of the multiplex structure (MZR, ZR, ZS).

2. Mobile radio receiver for cellular radio telecommunications systems, which
(a) can communicate with a large number of quasi-stationary radio transmitters (U-BS, H-BS), the quasi-stationary radio transmitters (U-BS, H-BS)
(a1) being arranged in radio cells of the radio telecommunications system for radio-cell-related transmission of radio messages which are included in a multiplex structure (MZR, ZR, ZS) having a plurality of structure elements (ZS) and allow telecommunications connections to be set up between the radio transmitter (U-BS, H-BS) and the radio receiver (MTₘ),
(a2) are each connected to a telecommunications network (TKN), synchronously or asynchronously with respect to one another, via a switching centre (PABX),
(b) has a functional unit comprising the following means:
(b1) first means (FKT) for receiving and processing the radio messages,
(b2) second means (SST, BMC) for producing and controlling the radio links to the quasi-stationary radio transmitters (U-BS, H-BS),
(b3) third means (ZST, uP, SPGM, SWS) for detecting and evaluating additional information (RSSV1, RSSV2, CRCV1, CRCV2) which indicates the radio link quality and is contained in the radio messages
(c) produces and maintains a first radio link to a first quasi-stationary radio transmitter (U-BS) on the basis of receiving a first radio message which is included in first structure elements (ZS3, ZS15) of the multiplex structure (MZR, ZR, ZS), this first radio link being used as a telecommunications link,
**characterized in that**
(d) the first to third means (FKT, SST, BMC, ZST, µP, SPGM, SWS) are designed and connected to one another in such a manner that
(d1) in addition to the first radio link, at least one second radio link to at least one second quasi-stationary radio transmitter (H-BS) is produced and maintained in the background on the basis of receiving radio messages which are included in the second to n-th structure elements (ZS1, ZS2, ZS4...ZS14, ZS16...ZS24) of the multiplex structure (MZR, ZR), which second radio link is intended to be used as a telecommunications link,
(d2) depending on the comparison between the link quality of the first radio link and the link quality of the second radio link, the respective link quality being determined from the evaluation of the respective radio-link-specific additional information (RSSV1, RSSV2, CRCV1, CRCV2), either the first radio link continues to be used as the telecommunications link, or the second radio link is used as a new telecommunications link,
(e) the second means (SST, BMC) have a number of counting devices (ZE, ZEₘ) corresponding to the number of radio links.

3. Mobile radio receiver for cellular radio telecommunications systems, which
(a) can communicate with a large number of quasi-stationary radio transmitters (U-BS, H-BS), the quasi-stationary radio transmitters (U-BS, H-BS)
(a1) being arranged in radio cells of the radio telecommunications system for radio-cell-related transmission of radio messages which are included in a multiplex structure (MZR, ZR, ZS) having a plurality of structure elements (ZS) and allow telecommunications connections to be set up between the radio transmitters (U-BS, H-BS) and the radio receiver (MTₘ),
(a2) are each connected to a telecommunications network (TKN), synchronously or asynchronously with respect to one another, via a switching centre (PABX),
(b) has a functional unit comprising the following means:
(b1) first means (FKT) for receiving and processing the radio messages,
(b2) second means (SST, BMC) for producing and controlling the radio links to the (quasi-)stationary radio transmitters (U-BS, H-BS),
(b3) third means (ZST, µP, SPGM, SWS) for detecting and evaluating additional information (RSSV1, RSSV2, CRCV1, CRCV2) which indicates the radio link quality and is contained in the radio messages
(c) produces and maintains a first radio link to a first quasi-stationary radio transmitter (U-BS) on the basis of receiving a first radio message which is included in first structure elements (ZS3, ZS15) of the multiplex structure (MZR, ZR, ZS), this first radio link being used as a telecommunications link,
**characterized in that**
(d) the first to third means (FKT, SST, BMC, ZST, uP, SPGM, SWS) are designed and connected to one another in such a manner that
(d1) in addition to the first radio link, at least one second radio link to at least one second quasi-stationary radio transmitter (H-BS) is produced and maintained in the background on the basis of receiving radio messages which are included in the second to n-th structure elements (ZS1, ZS2, ZS4...ZS14, ZS16...ZS24) of the multiplex structure, which second radio link is intended to be used as a telecommunications link,
(d2) depending on the comparison between the link quality of the first radio link and the link quality of the second radio link, the respective link quality being determined from the evaluation of the respective radio-link-specific additional information (RSSV1, RSSV2, CRCV1, CRCV2), either the first radio link continues to be used as the telecommunications link, or the second radio link is used as a new telecommunications link,
(e) the second means (SST, BMC) have a counting device (ZE) and an offset store (OSPₘ) which is allocated to this counting device (ZE).

4. Mobile radio receiver for cellular radio telecommunications systems according to Claim 2 or 3, **characterized in that**
the first to third means (FKT, SST, BMC, ZST, µP, SPGM, SWS) are designed in such a manner that the first radio link to the first quasi-stationary radio transmitter (U-BS) is controlled by a cyclic reception change, referred to as a bearer handover, from the first radio message, which is included in the first structure element (ZS3, ZS15) of the multiplex structure (MZR, ZR, ZS), to one of the radio messages which are included in the second to n-th structure elements (ZS1, ZS2, ZS4...ZS14, ZS16...ZS24) of the multiplex structure (MZR, ZR, ZS).

5. Mobile radio receiver for cellular radio telecommunications systems according to Claim 1, **characterized in that**
the second means (SST, BMC) have a number of counting devices (ZE, ZEₘ) corresponding to the number of radio links.

6. Mobile radio receiver for cellular radio telecommunications systems according to Claim 1, **characterized in that**
the second means (SST, BMC) have a counting device (ZE) and an offset store (OSPₘ) which is allocated to this counting device (ZE).

7. Mobile radio receiver for cellular radio telecommunications systems according to Claim 5, **characterized in that**
the counting devices (ZE, ZEₘ) each comprise a bit, time slot and a time frame counter.

8. Mobile radio receiver for cellular radio telecommunications systems according to Claim 6, **characterized in that**
the counting device (ZE) is designed as a bit counter, and the offset store (OSPₘ) carries out the functions of a time slot and time frame counter.

9. Mobile radio receiver for cellular radio telecommunications systems according to one of Claims 5 to 8, **characterized in that** the counting device (ZE, ZEₘ) and, possibly, the offset store (OSPₘ) are designed as software modules.

10. Mobile radio receiver for cellular radio telecommunications systems according to one of Claims 5 to 8, **characterized in that**
the counting device (ZE, ZEₘ) and, possibly, the offset store (OSPₘ) are designed as hardware modules.

11. Mobile radio receiver for cellular radio telecommunications systems according to one of Claims 1 to 10, **characterized in that**
the first to third means (FKT, SST, BMC, ZST, µP, SPGM, SWS) are designed and connected to one another in such a manner that the second radio link or links to the second quasi-stationary radio transmitter or transmitters (H-BS) is or are produced and maintained as a function of at least one predetermined additional-information-related threshold value (SW) being exceeded by an additional information value (RSSV1, CRCV1), which is obtained from the additional information received with the radio messages via the first radio link.

12. Mobile radio receiver for cellular radio telecommunications systems according to one of Claims 1 to 10, **characterized in that**
the first to third means (FKT, SST, BMC, ZST, µP, SPGM, SWS) are designed and connected to one another in such a manner that the second radio link or links to the second quasi-stationary radio transmitter or transmitters (H-BS) is or are produced and maintained as a function of at least one predetermined additional-information-related threshold value (SW) being undershot by an additional information value (RSSV1, CRCV1), which is obtained from the additional information received with the radio messages via the first radio link.

13. Mobile radio receiver for cellular radio telecommunications systems according to one of claims 1 to 12, **characterized in that**
the cellular radio telecommunications system is designed as a cellular cordless telecommunications system, the quasi-stationary radio transmitter (U-BS, H-BS) is designed as a cordless base station, and the mobile radio receiver (MTₘ) is designed as a cordless mobile part.

14. Mobile radio receiver for cellular radio telecommunications systems according to Claim 13, **characterized in that**
the cordless base station (U-BS, H-BS) and the cordless mobile part (MTₘ) are designed as cordless devices for transmitting radio messages in accordance with the DECT Standard.

15. Mobile radio receiver for cellular radio telecommunications systems according to one of Claims 1 to 12, **characterized in that**
the cellular radio telecommunications system is designed as a cellular mobile radio telecommunications system, the quasi-stationary radio transmitter (U-BS, H-BS) is designed as a mobile radio base station, and the mobile radio receiver (MTₘ) is designed as a mobile radio mobile part.

16. Mobile radio receiver for cellular radio telecommunications systems according to Claim 15, **characterized in that**
the mobile radio base station (U-BS, H-BS) and the mobile radio mobile part (MTₘ) are designed as mobile radio devices for transmitting radio messages in accordance with the GSM Standard.

17. Mobile radio receiver for cellular radio telecommunications systems according to one of Claims 1 to 16, **characterized in that**
the telecommunications network (TKN) is designed as a public telephone network (PSTN), ISDN network, private telecommunications network (PTN), mobile radio network or satellite radio network, and the switching centre (PABX) is designed as a private branch exchange (PABX).

18. Mobile radio receiver for cellular radio telecommunications systems according to one of Claims 1 to 17, **characterized in that**
the wanted information transmitted in the course of the telecommunications link represents spoken words, written words and/or images.

19. Mobile radio receiver for cellular radio telecommunications systems according to one of Claims 1 to 18, **characterized in that**
the multiplex structure (MZR, ZR, ZS) is designed as an FDMA/TDMA/TDD structure, and the structure elements (ZS) contained in the multiplex structure (MZR, ZR, ZS) are designed as time slots/channels.

## Revendications

1. Appareil mobile de réception radio pour systèmes cellulaires de télécommunication par radio qui
(a) est apte à communiquer à distance avec une pluralité d'appareils quasi-stationnaires d'émission radio (U-BS, H-BS), les appareils quasi-stationnaires d'émission radio (U-BS, H-BS)
(a1) étant disposés dans des cellules radio du système de télécommunication par radio pour émettre, spécifiquement pour chaque cellule radio, des messages radio, intégrés dans une structure multiplex (MZR, ZR, ZS) avec plusieurs éléments de structure (ZS) et qui permettent l'établissement de liaisons de télécommunication entre l'appareil d'émission radio (U-BS, H-BS) et l'appareil de réception radio (MTₘ),
(a2) étant raccordés, par l'intermédiaire d'un dispositif de commutation (PABX), à un réseau de télécommunication (TKN), selon le cas, synchrones ou asynchrones l'un par rapport à l'autre,
(b) comporte une unité fonctionnelle comprenant les moyens suivants:
(b1) des premiers moyens (FKT) pour recevoir et traiter les messages radio,
(b2) des deuxièmes moyens (SST, BMC) pour établir et contrôler des liaisons radio vers les appareils quasi-stationnaires d'émission radio (U-BS, H-BS),
(b3) des troisièmes moyens (ZST, µP, SPGM, SWS) pour saisir et évaluer des informations complémentaires (RSSV1, RSSV2, CRCV1, CRCV2) contenues dans les messages radio et indiquant la qualité de la liaison radio,
(c) établit et maintient, sur la base de la réception d'un premier message radio intégré dans des premiers éléments de structure (ZS3, ZS15) de la structure multiplex (MZR, ZR, ZS), une première liaison radio vers un premier appareil quasi-stationnaire d'émission radio (U-BS), qui sert de liaison de télécommunication,
**caractérisé par le fait que**
(d) les premiers aux troisièmes moyens (FKT, SST, BMC, ZST, µP, SPGM, SWS) sont conçus et reliés les uns aux autres de telle sorte que
(d1) en plus de la première liaison radio et en arrière-plan, sur la base de la réception de messages radio intégrés dans des deuxièmes à n-ièmes éléments de structure (ZS1, ZS2, ZS4 ... ZS14, ZS16 ... ZS24) de la structure multiplex (MZR, ZR), on établit et maintient, vers au moins un deuxième appareil quasi-stationnaire d'émission radio (H-BS), au moins une deuxième liaison radio, qui sert de liaison de télécommunication en attente,
(d2) en fonction de la comparaison entre la qualité de la première liaison radio et la qualité de la deuxième liaison radio, la qualité de chaque liaison étant déterminée à partir de l'analyse des informations complémentaires (RSSV1, RSSV2, CRCV1, CRCV2) spécifiques à chaque liaison radio, ou bien la première liaison radio continue à servir de liaison de télécommunication ou bien la deuxième liaison sert de nouvelle liaison de télécommunication,
(e) les premiers aux troisièmes moyens (FKT, SST, BMC, ZST, µP, SPGM, SWS) sont conçus de telle sorte que, grâce à un changement cyclique de réception, désigné comme "bearer handover", du premier message radio intégré dans le premier élément de structure (ZS3, ZS15) de la structure multiplex (MZR, ZR, ZS) sur un des messages radio intégrés dans les deuxièmes à n-ièmes éléments de structure (ZS1, ZS2, ZS4 ... ZS14, ZS16 ... ZS24) de la structure multiplex (MZR, ZR, ZS), la première liaison radio est dirigée vers le premier appareil quasi-stationnaire d'émission radio (U-BS).

2. Appareil mobile de réception radio pour systèmes cellulaires de télécommunication par radio qui
(a) est apte à communiquer à distance avec une pluralité d'appareils quasi-stationnaires d'émission radio (U-BS, H-BS), les appareils quasi-stationnaires d'émission radio (U-BS, H-BS)
(a1) étant disposés dans des cellules radio du système de télécommunication par radio pour émettre, spécifiquement pour chaque cellule radio, des messages radio, intégrés dans une structure multiplex (MZR, ZR, ZS) avec plusieurs éléments de structure (ZS) et qui permettent l'établissement de liaisons de télécommunication entre l'appareil d'émission radio (U-BS, H-BS) et l'appareil de réception radio (MTₘ),
(a2) étant raccordés, par l'intermédiaire d'un dispositif de commutation (PABX), à un réseau de télécommunication (TKN), selon le cas, synchrones ou asynchrones l'un par rapport à l'autre,
(b) comporte une unité fonctionnelle comprenant les moyens suivants:
(b1) des premiers moyens (FKT) pour recevoir et traiter les messages radio,
(b2) des deuxièmes moyens (SST, BMC) pour établir et contrôler les liaisons radio vers les appareils quasi-stationnaires d'émission radio (U-BS, H-BS),
(b3) des troisièmes moyens (ZST, µP, SPGM, SWS) pour saisir et évaluer des informations complémentaires (RSSV1, RSSV2, CRCV1, CRCV2) contenues dans les messages radio et indiquant la qualité de la liaison radio,
(c) établit et maintient, sur la base de la réception d'un premier message radio intégré dans des premiers éléments de structure (ZS3, ZS15) de la structure multiplex (MZR, ZR, ZS), une première liaison radio vers un premier appareil quasi-stationnaire d'émission radio (U-BS), qui sert de liaison de télécommunication,
**caractérisé par le fait que**
(d) les premiers aux troisièmes moyens (FKT, SST, BMC, ZST, µP, SPGM, SWS) sont conçus et reliés les uns aux autres de telle sorte que
(d1) en plus de la première liaison radio et en arrière-plan, sur la base de la réception de messages radio intégrés dans des deuxièmes à n-ièmes éléments de structure (ZS1, ZS2, ZS4 ... ZS14, ZS16 ... ZS24) de la structure multiplex (MZR, ZR), on établit et maintient, vers au moins un deuxième appareil quasi-stationnaire d'émission radio (H-BS), au moins une deuxième liaison radio, qui sert de liaison de télécommunication en attente,
(d2) en fonction de la comparaison entre la qualité de la première liaison radio et la qualité de la deuxième liaison radio, la qualité de chaque liaison étant déterminée à partir de l'analyse des informations complémentaires (RSSV1, RSSV2, CRCV1, CRCV2) spécifiques à chaque liaison radio, ou bien la première liaison radio continue à servir de liaison de télécommunication ou bien la deuxième liaison sert de nouvelle liaison de télécommunication,
(e) les deuxièmes moyens (SST, BMC) comportent un nombre de dispositifs de comptage (ZE, ZEₘ) correspondant au nombre de liaisons radio.

3. Appareil mobile de réception radio pour systèmes cellulaires de télécommunication par radio qui
(a) est apte à communiquer à distance avec une pluralité d'appareils quasi-stationnaires d'émission radio (U-BS, H-BS), les appareils quasi-stationnaires d'émission radio (U-BS, H-BS)
(a1) étant disposés dans des cellules radio du système de télécommunication par radio pour émettre, spécifiquement pour chaque cellule radio, des messages radio, intégrés dans une structure multiplex (MZR, ZR, ZS) avec plusieurs éléments de structure (ZS) et qui permettent l'établissement de liaisons de télécommunication entre l'appareil d'émission radio (U-BS, H-BS) et l'appareil de réception radio (MTₘ),
(a2) étant raccordés, par l'intermédiaire d'un dispositif de commutation (PABX), à un réseau de télécommunication (TKN), selon le cas, synchrones ou asynchrones l'un par rapport à l'autre,
(b) comporte une unité fonctionnelle comprenant les moyens suivants:
(b1) des premiers moyens (FKT) pour recevoir et traiter les messages radio,
(b2) des deuxièmes moyens (SST, BMC) pour établir et contrôler les liaisons radio vers les appareils quasi-stationnaires d'émission radio (U-BS, H-BS),
(b3) des troisièmes moyens (ZST, µP, SPGM, SWS) pour saisir et évaluer des informations complémentaires (RSSV1, RSSV2, CRCV1, CRCV2) contenues dans les messages radio et indiquant la qualité de la liaison radio
(c) établit et maintient, sur la base de la réception d'un premier message radio intégré dans des premiers éléments de structure (ZS3, ZS15) de la structure multiplex (MZR, ZR, ZS), une première liaison radio vers un premier appareil quasi-stationnaire d'émission radio (U-BS), qui sert de liaison de télécommunication,
**caractérisé par le fait que**
(d) les premiers aux troisièmes moyens (FKT, SST, BMC, ZST, µP, SPGM, SWS) sont conçus et reliés les uns aux autres de telle sorte que
(d1) en plus de la première liaison radio et en arrière-plan, sur la base de la réception de messages radio intégrés dans des deuxièmes à n-ièmes éléments de structure (ZS1, ZS2, ZS4 ... ZS14, ZS16 ... ZS24) de la structure multiplex (MZR, ZR), on établit et maintient, vers au moins un deuxième appareil quasi-stationnaire d'émission radio (H-BS), au moins une deuxième liaison radio, qui sert de liaison de télécommunication en attente,
(d2) en fonction de la comparaison entre la qualité de la première liaison radio et la qualité de la deuxième liaison radio, la qualité de chaque liaison étant déterminée à partir de l'analyse des informations complémentaires (RSSV1, RSSV2, CRCV1, CRCV2) spécifiques à chaque liaison radio, ou bien la première liaison radio continue à servir de liaison de télécommunication ou bien la deuxième liaison sert de nouvelle liaison de télécommunication,
(e) les deuxièmes moyens (SST, BMC) comportent un dispositif de comptage (ZE) et une mémoire à décalage (OSPₘ) affectée à ce dispositif de comptage (ZE).

4. Appareil mobile de réception radio pour systèmes cellulaires de télécommunication par radio selon la revendication 2 ou 3
**caractérisé par le fait que**
les premiers aux troisièmes moyens (FKT, SST, BMC, ZST, µP, SPGM, SWS) sont conçus de telle sorte que, grâce à un changement cyclique de réception, désigné comme "bearer handover", du premier message radio intégré dans le premier élément de structure (ZS3, ZS15) de la structure multiplex (MZR, ZR, ZS) sur un des messages radio intégrés dans les deuxièmes à n-ièmes éléments de structure (ZS1, ZS2, ZS4 ... ZS14, ZS16 ... ZS24) de la structure multiplex (MZR, ZR, ZS), la première liaison radio est dirigée vers le premier appareil quasi-stationnaire d'émission radio (U-BS).

5. Appareil mobile de réception radio pour systèmes cellulaires de télécommunication par radio selon la revendication 1
**caractérisé par le fait que**
les deuxièmes moyens (SST, BMC) comportent un nombre de dispositifs de comptage (ZE, ZEₘ) correspondant au nombre de liaisons radio.

6. Appareil mobile de réception radio pour systèmes cellulaires de télécommunication par radio selon la revendication 1
**caractérisé par le fait que**
les deuxièmes moyens (SST, BMC) comportent un dispositif de comptage (ZE) et une mémoire à décalage (OSPₘ) affectée à ce dispositif de comptage (ZE).

7. Appareil mobile de réception radio pour systèmes cellulaires de télécommunication par radio selon la revendication 5
**caractérisé par le fait que**
les dispositifs de comptage (ZE, ZEₘ) se composent, dans chaque cas, d'un compteur de bits, de fenêtres de temps et de cadres de temps.

8. Appareil mobile de réception radio pour systèmes cellulaires de télécommunication par radio selon la revendication 6
**caractérisé par le fait que**
le dispositif de comptage (ZE) est conçu comme compteur de bits et que la mémoire à décalage (OSPₘ) se charge des fonctions d'un compteur de fenêtres de temps et de cadres de temps.

9. Appareil mobile de réception radio pour systèmes cellulaires de télécommunication par radio selon l'une des revendications 5 à 8
**caractérisé par le fait que**
le dispositif de comptage (ZE, ZEₘ) et, le cas échéant, la mémoire à décalage (OSPₘ) sont conçus comme modules de logiciel.

10. Appareil mobile de réception radio pour systèmes cellulaires de télécommunication par radio selon l'une des revendications 5 à 8
**caractérisé par le fait que**
le dispositif de comptage (ZE, ZEₘ) et, le cas échéant, la mémoire à décalage (OSPₘ) sont conçus comme modules de matériel.

11. Appareil mobile de réception radio pour systèmes cellulaires de télécommunication par radio selon l'une des revendications 1 à 10
**caractérisé par le fait que**
les premiers aux troisièmes moyens (FKT, SST, BMC, ZST, µP, SPGM, SWS) sont conçus et reliés entre eux de telle sorte que la (ou les) deuxième(s) liaison(s) radio vers le (ou les) deuxième(s) appareil(s) quasi-stationnaire(s) d'émission radio (H-BS) est (sont) établie(s) et maintenue(s) en fonction du dépassement vers le haut d'au moins une valeur de seuil (SW), prédéfinie et relative à l'information supplémentaire, par une valeur d'information supplémentaire (RSSV1, CRCV1), qui découle des informations supplémentaires reçues avec les messages radio par l'intermédiaire de la première liaison radio.

12. Appareil mobile de réception radio pour systèmes cellulaires de télécommunication par radio selon l'une des revendications 1 à 10
**caractérisé par le fait que**
les premiers aux troisièmes moyens (FKT, SST, BMC, ZST, µP, SPGM, SWS) sont conçus et reliés entre eux de telle sorte que la (ou les) deuxième(s) liaison(s) radio vers le (ou les) deuxième(s) appareil(s) quasi-stationnaire(s) d'émission radio (H-BS) est (sont) établie(s) et maintenue(s) en fonction du dépassement vers le bas d'au moins une valeur de seuil (SW), prédéfinie et relative à l'information supplémentaire, par une valeur d'information supplémentaire (RSSV1, CRCV1), qui découle des informations supplémentaires reçues avec les messages radio par l'intermédiaire de la première liaison radio.

13. Appareil mobile de réception radio pour systèmes cellulaires de télécommunication par radio selon l'une des revendications 1 à 12
**caractérisé par le fait que**
le système cellulaire de télécommunication radio est conçu comme système cellulaire de télécommunication sans cordon, l'appareil quasi-stationnaire d'émission radio (U-BS, H-BS) comme station de base sans cordon et l'appareil mobile de réception radio (MTₘ) comme poste mobile sans cordon.

14. Appareil mobile de réception radio pour systèmes cellulaires de télécommunication par radio selon la revendication 13
**caractérisé par le fait que**
la station de base sans cordon (U-BS, H-BS) et le poste mobile sans cordon (MTₘ) sont conçus comme appareils sans cordon pour la transmission de messages radio selon la norme DECT.

15. Appareil mobile de réception radio pour systèmes cellulaires de télécommunication par radio selon l'une des revendications 1 à 12
**caractérisé par le fait que**
le système cellulaire de télécommunication radio est conçu comme système cellulaire de télécommunication par radio mobile, l'appareil quasi-stationnaire d'émission radio (U-BS, H-BS) comme station de base de radio mobile et l'appareil mobile de réception radio (MTₘ) comme poste mobile de radio mobile.

16. Appareil mobile de réception radio pour systèmes cellulaires de télécommunication par radio selon la revendication 15
**caractérisé par le fait que**
la station de base de radio mobile (U-BS, H-BS) et le poste mobile de radio mobile (MTₘ) sont conçus comme appareils de radio mobile pour la transmission de messages radio selon la norme GSM.

17. Appareil mobile de réception radio pour systèmes cellulaires de télécommunication par radio selon l'une des revendications 1 à 16
**caractérisé par le fait que**
le réseau de télécommunication (TKN) est conçu comme réseau public de téléphonie (PSTN), réseau RNIS, réseau de télécommunication privé (PTN), réseau de radio mobile ou de radio par satellites et le dispositif de commutation (PABX) comme installation privée à postes supplémentaires (PABX).

18. Appareil mobile de réception radio pour systèmes cellulaires de télécommunication par radio selon l'une des revendications 1 à 17
**caractérisé par le fait que**
les informations utiles transmises dans le cadre de la liaison de télécommunication représentent des mots parlés, des mots écrits et/ou des images.

19. Appareil mobile de réception radio pour systèmes cellulaires de télécommunication par radio selon l'une des revendications 1 à 18
**caractérisé par le fait que**
la structure multiplex (MZR, ZR, ZS) est conçue comme structure FDMA/TDMA/TDD et que les éléments de structure contenus dans la structure multiplex (MZR, ZR, ZS) sont conçus comme fenêtres de temps / canaux.
